# EUROPEAN PATENT APPLICATION

(11) **EP 2 829 984 A1**
(43) Date of publication of application: **28.01.2015**
(21) Application number: 13770156.1
(22) Date of filing: 28.02.2013
(51) Int. Cl.: G06F 13/00, G06F 15/00

(54) **INFORMATION PROCESSING SYSTEM, INFORMATION PROCESSING METHOD, INFORMATION PROCESSING DEVICE, AND CONTROL METHOD AND CONTROL PROGRAM THEREFOR**

(30) Priority: 24.03.2012 JP 2012068506
(71) Applicant: NEC Corporation, Tokyo 108-8001 (JP)
(72) Inventor: KOBAYASHI, Yoshikazu, Tokyo 108-8001 (JP)
(74) Representative: Vossius & Partner
(86) International application number: PCT/JP2013/055550
(87) International publication number: WO 2013/146084

(57) **Abstract**

A system of this invention is directed to an information processing system that acquires a processing result at a desired timing without interrupting execution of an application even if communication disconnection occurs when requesting another information processing apparatus to execute information processing. The information processing system includes a first information processing apparatus and a second information processing apparatus which are connected to each other for communication. In response to a request of information processing from the first information processing apparatus to the second information processing apparatus, access information used to access a processing result storage in which the second information processing apparatus stores a result of the information processing is generated and notified to the first information processing apparatus. The second information processing apparatus continues executing the information processing during communication disconnection between the first information processing apparatus and the second information processing apparatus, stores the result of the information processing in the processing result storage to be accessed based on the access information, and provides the result of the information processing stored in the processing result storage in response to an access based on the access information from the first information processing apparatus.

## Description

### TECHNICAL FIELD

The present invention relates to a technique of maintaining service providing when requesting an external apparatus to execute information processing.

### BACKGROUND ART

In the above technical field, patent literature 1 discloses a technique of increasing the efficiency of communication between a thin client terminal and a server that executes an application in accordance with a manipulation of the thin client terminal in a thin client system.

### CITATION LIST

### PATENT LITERATURE

Patent literature 1: Japanese Patent Laid-Open No. 2005-228227

### SUMMARY OF THE INVENTION

### TECHNICAL PROBLEM

In the technique described in the above literature, however, when the communication between the thin client terminal and the server is disconnected due to some reason, the application executed in accordance with the manipulation of the thin client terminal is also interrupted. It is therefore necessary to start the application again or resume it from the interrupt time, resulting in a low processing efficiency.

The present invention enables to provide a technique of solving the above-described problem.

### SOLUTION TO PROBLEM

One aspect of the present invention provides an information processing system including a first information processing apparatus and a second information processing apparatus which are connected to each other for communication, comprising:
a requester arranged in the first information processing apparatus that sends a request of executing information processing to the second information processing apparatus;
an access information notifier that generates access information used to access a processing result storage in which the second information processing apparatus stores a result of the information processing in accordance with the request of the information processing from the first information processing apparatus, and notifies the access information from the second information processing apparatus to the first information processing apparatus;
a processing controller that continues executing the information processing during communication disconnection between the first information processing apparatus and the second information processing apparatus, and stores result of the information processing into the processing result storage to be accessed based on the access information; and
a processing result provider that provides the result of the information processing stored in the processing result storage to the first information processing apparatus in response to an access based on the access information from the first information processing apparatus.

Another aspect of the present invention provides a control method of an information processing system including a first information processing apparatus and a second information processing apparatus which are connected to each other for communication, the method comprising:
sending a request of executing information processing from the first information processing apparatus to the second information processing apparatus;
generating access information used to access a processing result storage in which the second information processing apparatus stores a result of the information processing in accordance with the request of the information processing from the first information processing apparatus, and notifying the access information from the second information processing apparatus to the first information processing apparatus;
continuing to execute the information processing by the second information processing apparatus during communication disconnection between the first information processing apparatus and the second information processing apparatus, and storing the result of the information processing into the processing result storage to be accessed based on the access information; and
providing the result of the information processing stored in the processing result storage to the first information processing apparatus in response to an access based on the access information from the first information processing apparatus.

Still other aspect of the present invention provides an information processing apparatus that receives a request of information processing from another information processing apparatus, comprising:
a request acceptor that accepts the request of the information processing from an information processing apparatus of a request source;
an access information transmitter that generates access information used to access a processing result storage storing a result of the information processing in accordance with the request of the information processing from the information processing apparatus of the request source, and notifies the information processing apparatus of the request source of the access information;
a processing controller that continues executing the information processing during communication disconnection to the information processing apparatus of the request source, and stores the result of the information processing into the processing result storage to be accessed based on the access information; and
a processing result provider that provides the result of the information processing stored in the processing result storage to the information processing apparatus of the request source in response to an access based on the access information from the information processing apparatus of the request source.

Still other aspect of the present invention provides a control method of an information processing apparatus that receives a request of information processing from another information processing apparatus, the method comprising:
accepting the request of the information processing from an information processing apparatus of a request source;
generating access information used to access a processing result storage storing a result of the information processing in accordance with the request of the information processing from the information processing apparatus of the request source, and notifying the information processing apparatus of the request source of the access information;
continuing to execute the information processing during communication disconnection to the information processing apparatus of the request source, and storing the result of the information processing into the processing result storage to be accessed based on the access information; and
providing the result of the information processing stored in the processing result storage to the information processing apparatus of the request source in response to an access based on the access information from the information processing apparatus of the request source.

Still other aspect of the present invention provides a control program of an information processing apparatus that receives a request of information processing from another information processing apparatus, which causes a computer to execute:
accepting the request of the information processing from an information processing apparatus of a request source;
generating access information used to access a processing result storage storing a result of the information processing in accordance with the request of the information processing from the information processing apparatus of the request source, and notifying the information processing apparatus of the request source of the access information;
continuing to execute the information processing during communication disconnection to the information processing apparatus of the request source, and storing the result of the information processing into the processing result storage to be accessed based on the access information; and
providing the result of the information processing stored in the processing result storage to the information processing apparatus of the request source in response to an access based on the access information from the information processing apparatus of the request source.

Still other aspect of the present invention provides an information processing apparatus that sends a request of executing information processing to another information processing apparatus, comprising:
a request transmitter that transmits the request of the information processing to an information processing system of a request destination;
an access information receiver that receives, from the information processing apparatus of the request destination, access information used to access a processing result storage in which the information processing apparatus of the request destination stores a result of the information processing; and
a disconnector that disconnects communication with the information processing apparatus of the request destination before an end of the information processing in the information processing apparatus of the request destination.

Still other aspect of the present invention provides a control method of an information processing apparatus that sends a request of executing information processing to another information processing apparatus, the method comprising:
transmitting the request of the information processing to an information processing system of a request destination;
receiving, from the information processing apparatus of the request destination, access information used to access a processing result storage in which the information processing apparatus of the request destination stores a result of the information processing; and
disconnecting communication with the information processing apparatus of the request destination before an end of the information processing in the information processing apparatus of the request destination.

Still other aspect of the present invention provides a control program of an information processing apparatus that sends a request of executing information processing to another information processing apparatus, which causes a computer to execute:
transmitting the request of the information processing to an information processing system of a request destination;
receiving, from the information processing apparatus of the request destination, access information used to access a processing result storage in which the information processing apparatus of the request destination stores a result of the information processing; and
disconnecting communication with the information processing apparatus of the request destination before an end of the information processing in the information processing apparatus of the request destination.

### ADVANTAGEOUS EFFECTS OF INVENTION

According to the present invention, even if communication disconnection occurs when requesting another information processing apparatus to execute information processing, execution of an application is not interrupted, and the processing result can be acquired at a desired timing.

### BRIEF DESCRIPTION OF DRAWINGS

Fig. 1 is a block diagram showing the arrangement of an information processing system according to the first embodiment of the present invention;
Fig. 2 is a view for explaining the operation of an information processing system according to the second embodiment of the present invention;
Fig. 3 is a block diagram showing the arrangement of the information processing system according to the second embodiment of the present invention;
Fig. 4 is a sequence chart showing the operation procedure of the information processing system according to the second embodiment of the present invention;
Fig. 5 is a block diagram showing the functional arrangement of a cloud server according to the second embodiment of the present invention;
Fig. 6 is a block diagram showing the functional arrangement of a storage destination server according to the second embodiment of the present invention;
Fig. 7 is a block diagram showing the functional arrangement of a client apparatus according to the second embodiment of the present invention;
Fig. 8 is a view showing the arrangement of a client DB according to the second embodiment of the present invention;
Fig. 9 is a view showing the arrangement of an application DB according to the second embodiment of the present invention;
Fig. 10 is a view showing the arrangement of a processing result DB according to the second embodiment of the present invention;
Fig. 11 is a block diagram showing the hardware arrangement of the cloud server according to the second embodiment of the present invention;
Fig. 12A is a view showing the arrangement of an application execution table according to the second embodiment of the present invention;
Fig. 12B is a view showing the arrangement of a processing result storage destination table according to the second embodiment of the present invention;
Fig. 13A is a flowchart showing the processing procedure of the cloud server according to the second embodiment of the present invention;
Fig. 13B is a flowchart showing the processing procedure of an application execution module according to the second embodiment of the present invention;
Fig. 14 is a block diagram showing the hardware arrangement of the storage destination server according to the second embodiment of the present invention;
Fig. 15 is a flowchart showing the processing procedure of the storage destination server according to the second embodiment of the present invention;
Fig. 16 is a block diagram showing the hardware arrangement of the client apparatus according to the second embodiment of the present invention;
Fig. 17 is a view showing the arrangement of a command conversion table according to the second embodiment of the present invention;
Fig. 18 is a flowchart showing the processing procedure of the client apparatus according to the second embodiment of the present invention;
Fig. 19 is a sequence chart showing the operation procedure of an information processing system according to the third embodiment of the present invention;
Fig. 20 is a block diagram showing the functional arrangement of a cloud server according to the third embodiment of the present invention;
Fig. 21A is a view showing the arrangement of a first execution time setting table according to the third embodiment of the present invention;
Fig. 21B is a view showing the arrangement of a second execution time setting table according to the third embodiment of the present invention;
Fig. 21C is a view showing the arrangement of a third execution time setting table according to the third embodiment of the present invention;
Fig. 22 is a view for explaining the operation of an information processing system according to the fourth embodiment of the present invention;
Fig. 23 is a sequence chart showing the operation procedure of the information processing system according to the fourth embodiment of the present invention;
Fig. 24 is a block diagram showing the functional arrangement of a cloud server according to the fourth embodiment of the present invention;
Fig. 25 is a view showing the arrangement of a client DB according to the fourth embodiment of the present invention;
Fig. 26 is a view for explaining the operation of an information processing system according to the fifth embodiment of the present invention;
Fig. 27 is a sequence chart showing the operation procedure of the information processing system according to the fifth embodiment of the present invention;
Fig. 28 is a block diagram showing the functional arrangement of a cloud server according to the fifth embodiment of the present invention;
Fig. 29 is a view showing the arrangement of a customer DB according to the fifth embodiment of the present invention;
Fig. 30 is a view for explaining the operation of an information processing system according to the sixth embodiment of the present invention;
Fig. 31 is a sequence chart showing the operation procedure of the information processing system according to the sixth embodiment of the present invention;
Fig. 32 is a view showing communication protocol stacks according to the sixth embodiment of the present invention;
Fig. 33A is a sequence chart showing an example of the operation procedure of an information processing system according to the seventh embodiment of the present invention;
Fig. 33B is a view showing the arrangement of a processing interrupt avoiding measure table according to the seventh embodiment of the present invention;
Fig. 33C is a sequence chart showing another example of the operation procedure of the information processing system according to the seventh embodiment of the present invention;
Fig. 33D is a view showing the arrangement of a virtual client apparatus table according to the seventh embodiment of the present invention;
Fig. 34 is a sequence chart showing the operation procedure of an information processing system according to the eighth embodiment of the present invention; and
Fig. 35 is a block diagram showing the arrangement of an information processing system according to the ninth embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise. Note that wording "disconnection of communication connection" or "communication disconnection" used in this embodiment includes, for example, an end of communication, an end of an application that controls communication, power-off of a client apparatus, and a client non-access state more than a predetermined time. This wording also includes interrupt of communication caused by a communication failure or a problem of communication capacity, traffic, or the like. However, the present invention is not limited to these. In this embodiment, "client apparatus" and "client" indicate different subjects. Wording "client" represents a user who owns "client apparatus" or a user who uses "client apparatus".

### [First Embodiment]

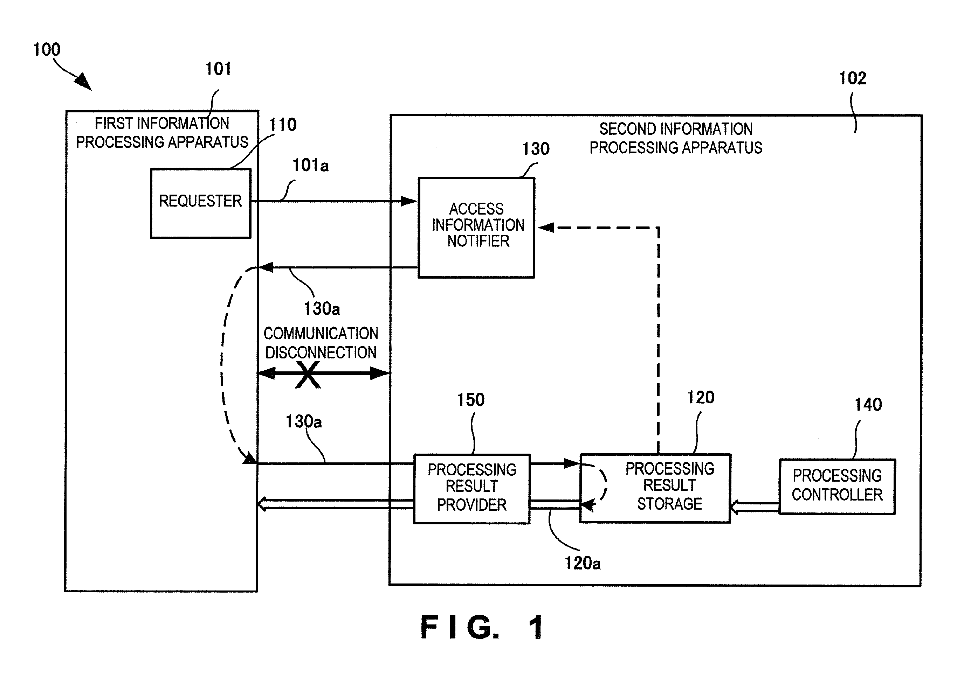

An information processing system 100 according to the first embodiment of the present invention will be described with reference to Fig. 1. The information processing system 100 is a system including a first information processing apparatus 101 and a second information processing apparatus 102 which are connected for communication.

As shown in Fig. 1, the information processing system 100 includes a requester 110, a processing result storage 120, an access information notifier 130, a processing controller 140, and a processing result provider 150. The requester 110 is arranged in the first information processing apparatus 101 and sends a request 101 a of information processing to the second information processing apparatus 102. The access information notifier 130 generates access information 130a used to access the processing result storage 120 that stores the result of information processing of the second information processing apparatus 102 and notifies it from the second information processing apparatus 102 to the first information processing apparatus 101 in accordance with the request 101 a of information processing from the first information processing apparatus 101. The processing controller 140 causes the second information processing apparatus 102 to continue information processing during communication disconnection between the first information processing apparatus 101 and the second information processing apparatus 102, and stores the result of information processing in the processing result storage 120 to be accessed based on the access information 130a. The processing result provider 150 provides a result 120a of information processing stored in the processing result storage 120 to the first information processing apparatus 101 in response to the access based on the access information 103a from the first information processing apparatus 101.

According to this embodiment, even if communication disconnection occurs when requesting another information processing apparatus to execute information processing, the processing result can be acquired at a desired timing without interrupting execution of an application.

### [Second Embodiment]

An information processing system according to the second embodiment of the present invention will be described next. The information processing system according to this embodiment continuously executes information processing requested from a client apparatus to a cloud server (including an application server) even during disconnection of communication between the client apparatus and the cloud server. The information processing system stores the information processing result in a processing result storage and allows any client apparatus to access as long as the client (the user of the client apparatus) can be authenticated. Before communication disconnection, the cloud server notifies the client apparatus of access information that allows access to the processing result storage. The client can access the processing result storage and acquire the processing result at a desired time.

According to this embodiment, even when communication disconnection occurs after requesting the cloud server to execute information processing, the processing result can be acquired from any client apparatus at a desired timing without interrupting execution of an application. Note that the convenience is more conspicuous when the information processing system is a thin client-server system.

### «Operation of Information Processing System»

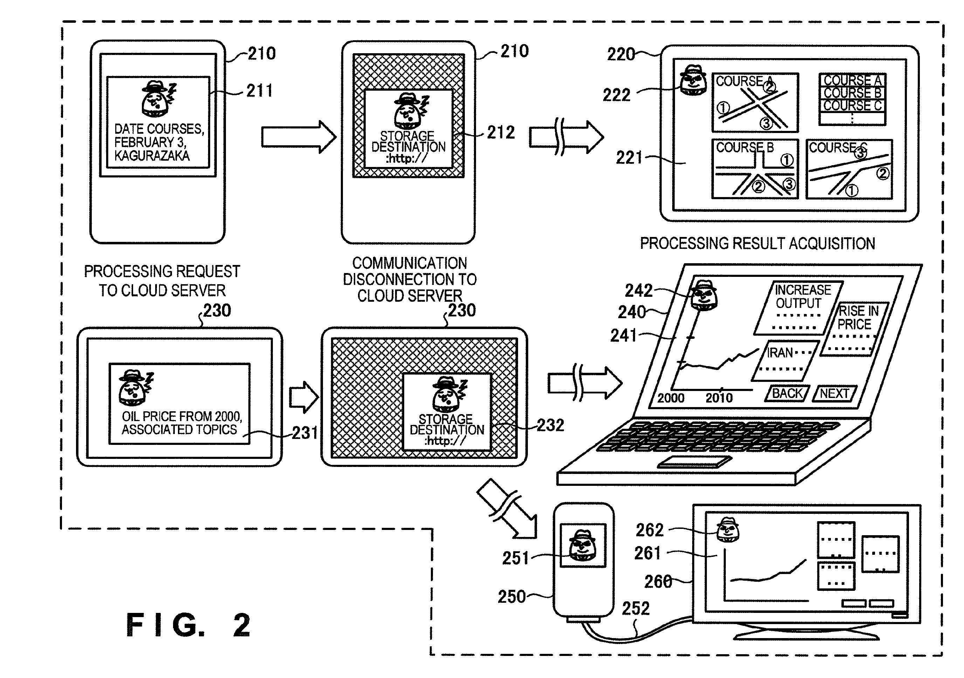

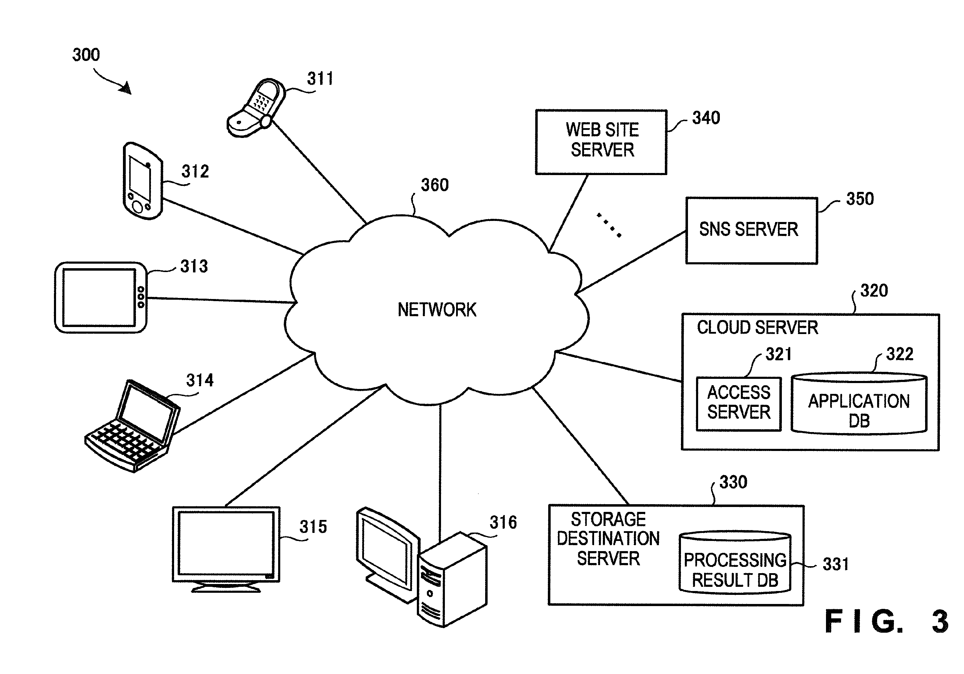

Fig. 2 is a view for explaining the operation of the information processing system according to this embodiment. Note that in Fig. 2, the client apparatus is represented by a communication terminal. However, as shown in Fig. 3, the client apparatus may be a desktop PC (Personal Computer) or a notebook PC, or a digital TV, a digital camera, or the like.

The upper stage of Fig. 2 shows the operation of the information processing system when a data collection and search/editing instruction 211 to obtain "courses of a date in the Kagurazaka area on February 3" is sent from the display screen of a communication terminal 210 to the cloud server. Search/editing here includes search processing and editing processing of found information.

After the processing request is input in the left view of the upper stage of Fig. 2, the communication between the communication terminal 210 and the cloud server is disconnected as shown in the central view of the upper stage. The communication terminal 210 displays a storage destination 212 to store a processing result that the cloud server has obtained by executing processing corresponding to the instruction. In Fig. 2, the transmission destination is represented by a URL (Uniform Resource Locator). However, the transmission destination is not limited to this. Note that the storage destination 212 is not necessarily displayed at the time of communication disconnection and can be displayed at any timing after the processing request. In addition, the icon of a person displayed at the search/editing instruction 211 or the storage destination 212 is used to easily input a processing request according to this embodiment or instruct processing result acquisition. For example, the icon of a sleeping person indicates a processing request during communication disconnection according to this embodiment, and the icon of a waking person indicates processing result acquisition.

The right view of the upper stage of Fig. 2 shows a display screen 221 displayed when another communication terminal 220 acquires the processing result of the cloud server from the storage destination. The display screen 221 displays three courses A to C as the processing result. An icon 222 in the display screen 221 represents access of the processing result. Although not illustrated, it is more convenient to transfer the storage destination 212 at the center of the upper stage to the other communication terminal 220 and acquire the processing result by clicking the icon.

The lower stage of Fig. 2 shows the operation of the information processing system when a data collection and search/editing instruction 231 to obtain "the oil price fluctuation from 2000 and associated topics that affected the oil price in the meantime" is sent from the display screen of a communication terminal 230 to the cloud server.

After the processing request is input in the left view of the lower stage of Fig. 2, the communication between the communication terminal 230 and the cloud server is disconnected as shown in the central view of the lower stage. The communication terminal 230 displays a storage destination 232 to store a processing result that the cloud server has obtained by executing processing corresponding to the instruction. The storage destination 232 is the same as in the central view of the upper stage.

The right view of the lower stage of Fig. 2 shows display screens 241 and 261 displayed when two other different communication terminals 240 and 250 acquire the processing result of the cloud server from the storage destination. The communication terminal 240 here is a notebook PC and displays a processing result corresponding to the data collection and search/editing instruction 231. An icon 242 of a person in the display screen 241 represents access of the processing result, as in the right view of the upper stage. On the other hand, the communication terminal 250 is a portable phone. The communication terminal 250 is connected to a display device 260 via a USB (Universal Serial Bus) cable 252. The display screen 261 of the display device 260 displays a largely enlarged processing result. Both an icon 251 of a person on the communication terminal 250 and an icon 262 of a person in the display screen 261 represent access of the processing result, as in the right view of the upper stage.

### «Arrangement of Information Processing System»

Fig. 3 is a block diagram showing the arrangement of an information processing system 300 according to this embodiment.

The information processing system 300 includes client apparatuses 311 to 316, a cloud server 320, and a storage destination server 330 which are connected via a network. The information processing system 300 may also include a web side server 340 and an SNS (Social Networking Service) server 350. Note that the information providing servers that provide information for processing of the cloud server 320 are not limited to those shown in Fig. 3.

The client apparatuses 311 to 316 correspond to the communication terminals 210 to 250 shown in Fig. 2, and include the client apparatuses 311 to 313 that are communication terminals, the client apparatus 314 that is a notebook PC, the client apparatus 315 that is a digital TV, and the client apparatus 316 that is a desktop PC. The client apparatuses 311 to 316 request the cloud server 320 to execute information processing and acquire a processing result from the storage destination server 330.

The cloud server 320 includes an access server 321 that collects information from the web side server 340, the SNS server 350, and the like, and an application DB 322 that stores applications to be executed in correspondence with an information processing request from the client apparatuses 311 to 316.

The storage destination server 330 includes a processing result DB 331 that stores a processing result that the cloud server 320 has obtained by performing information processing even during communication disconnection to the client apparatuses 311 to 316. In response to access from the client apparatuses 311 to 316, the storage destination server 330 provides the processing result in the processing result DB 331 to the client apparatuses 311 to 316 when the client can be authenticated.

### «Operation Procedure of Information Processing System»

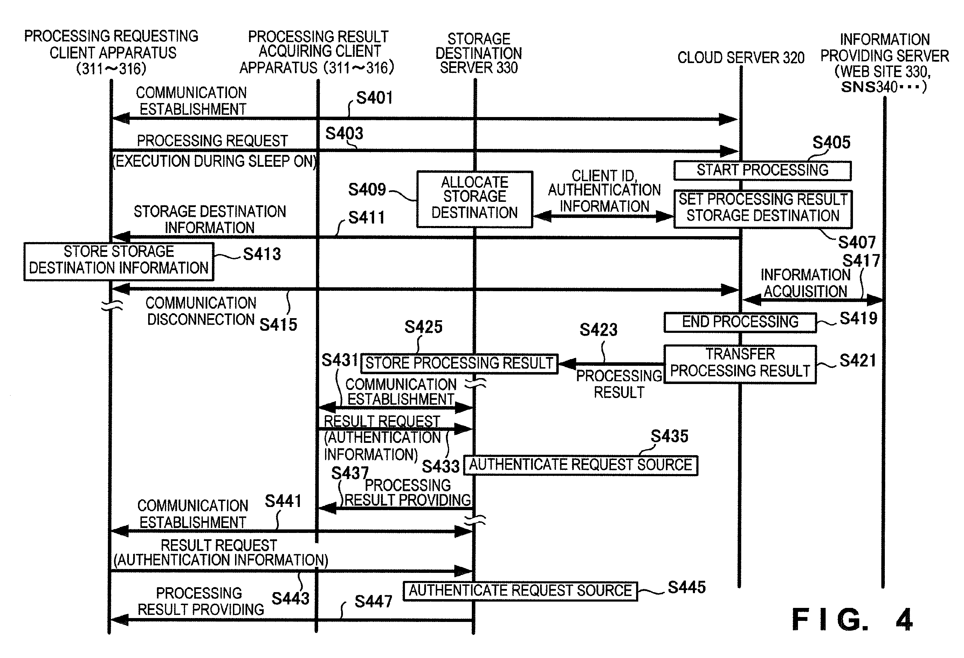

Fig. 4 is a sequence chart showing the operation procedure of the information processing system 300 according to this embodiment.

First, in step S401, communication between the cloud server 320 and the client apparatuses 311 to 316 that request processing is established. In step S403, the client apparatuses 311 to 316 request the cloud server 320 to do processing. In this request, a sleep execution flag is turned on, thereby instructing execution during sleep by which the cloud server 320 continues processing even when communication to the client apparatus is disconnected.

Note that in this example, the sleep execution flag is included in the processing request, as described. However, the present invention is not limited to this. For example, if this setting is incorporated in the contract at the time of client registration in advance when making the contract with the cloud server 320, the cloud server 320 automatically shifts to the sleep execution mode after authenticating the client. Alternatively, the sleep execution mode is set not by instructing to turn on the sleep execution flag but by canceling conditions of processing execution interrupt in sleep.

In step S405, the cloud server 320 reads out an application and starts executing the requested processing. In step S407, the cloud server 320 requests the storage destination server 330 to allocate a processing result storage destination, and if allocated, sets the storage destination. At this time, a client ID and authentication information (for example, password and authentication ID) are sent from the cloud server 320 to the storage destination server 330. In step S409, the storage destination server 330 allocates the storage destination upon receiving the request.

In step S411, the cloud server 320 notifies the client apparatuses 311 to 316 of the request source of the storage destination information. The storage destination information includes a URL, as shown in Fig. 2. Upon receiving the storage destination information, the client apparatuses 311 to 316 of the request source store the received storage destination information in step S413. In step S415, the client apparatuses 311 to 316 of the request source disconnect communication with the cloud server 320. Note that the client apparatus 314 that is a notebook PC, the client apparatus 316 that is a desktop PC, and the like may be powered off after communication disconnection.

The cloud server 320 continues the requested processing even when communication disconnection has occurred with respect to the client apparatuses 311 to 316 of the request source. In step S417, the cloud server 320 acquires information from an information providing server as part of the processing.

When the requested processing ends in step S419, the cloud server 320 transfers the processing result to the storage destination server 330 in step S421. In step S425, the processing result sent from the cloud server 320 to the storage destination server 330 in step S423 is stored at the storage destination allocated by the storage destination server 330.

After that, in step S431, communication between the storage destination server 330 and the client apparatuses 311 to 316 that are different from the client apparatus that has requested and acquire the processing result is established. In this example, the access is done based on a URL. In step S433, the client apparatuses 311 to 316 that acquire the processing result transmit a processing result acquisition request to the storage destination server 330 together with the client ID and authentication information. In step S435, the storage destination server 330 authenticates the processing result request source. If authentication is impossible, the processing stops. If the client apparatus is authenticated, in step S437, the storage destination server 330 provides the processing result to the client apparatuses 311 to 316 that acquire the processing result. Note that the processes of steps S431 to S437 can be performed as a series of processes based on simple instructions by the client. For example, the processes are preferably performed only by clicking the icon of a person, as shown in Fig. 2.

In step S441, communication between the storage destination server 330 and the client apparatuses 311 to 316 that have requested is established. In this example, the access is done based on a URL. In step S443, the client apparatuses 311 to 316 that have requested transmit a processing result acquisition request to the storage destination server 330 together with the client ID and authentication information. In step S445, the storage destination server 330 authenticates the processing result request source. If authentication is impossible, the processing stops. If the client apparatus is authenticated, the storage destination server 330 provides the processing result to the client apparatuses 311 to 316 that have requested in step S447. Note that the processes of steps S441 to S447 are also preferably performed only by clicking the icon of a person, as shown in Fig. 2.

As described above, in this embodiment, by requesting the cloud server to do processing, the processing result can be acquired from any client apparatus at a desired time even when communication disconnection has occurred.

### «Functional Arrangement of Cloud Server»

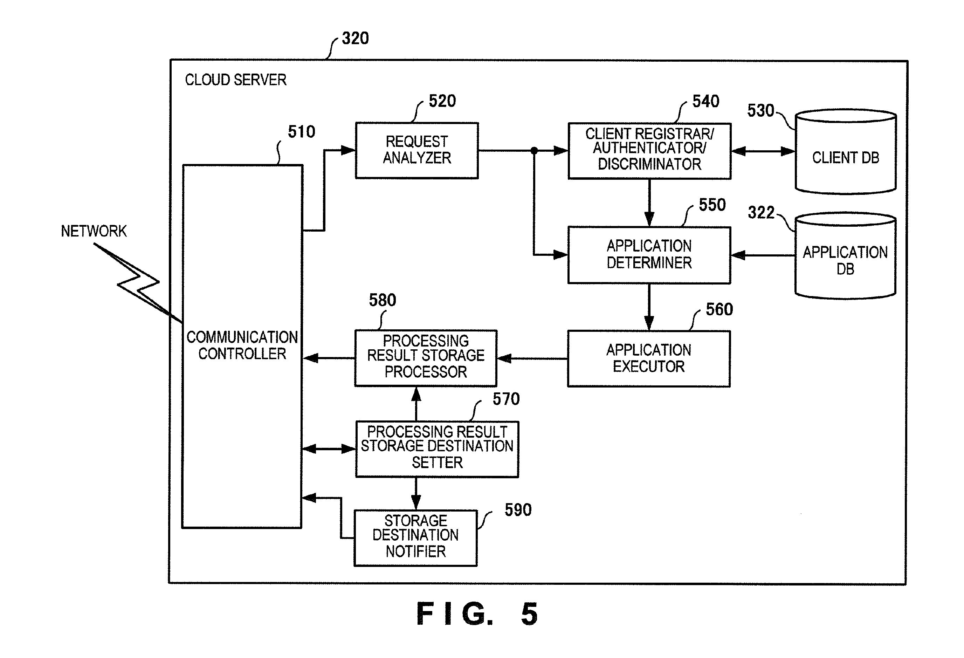

Fig. 5 is a block diagram showing the functional arrangement of the cloud server 320 according to this embodiment.

The cloud server 320 includes a communication controller 510 that communicates with another server or client apparatus via a network 360. A request analyzer 520 analyzes a request that the communication controller 510 receives from the client apparatus. In this example, the request analyzer 520 analyzes a request to request information processing.

A client registrar/authenticator/discriminator 540 registers, in a client DB 530, client information included in a request, or performs authentication or client determination based on authentication information by referring to the client DB 530. As a result, the request of information processing from the client apparatus is accepted. An application determiner 550 determines an application to execute requested processing included in the request, reads out the application from the application DB 322, and sends it to an application executor 560. The application executor 560 executes the application to implement the requested information processing.

A processing result storage destination setter 570 communicates with the storage destination server 330 via the communication controller 510, requests to allocate a processing result storage destination, and if allocated, sends a client ID and authentication information to the storage destination server 330. A processing result storage processor 580 transmits the processing result of the application whose execution is completed by the application executor 560 to the area set by the processing result storage destination setter 570 and allocated by the storage destination server 330. A storage destination notifier 590 transmits access information that allows access to the area set by the processing result storage destination setter 570 and allocated in the storage destination server 330 to the client apparatuses 311 to 316 that have requested. That is, the storage destination notifier 590 has an access information transmission function.

### «Functional Arrangement of Storage Destination Server»

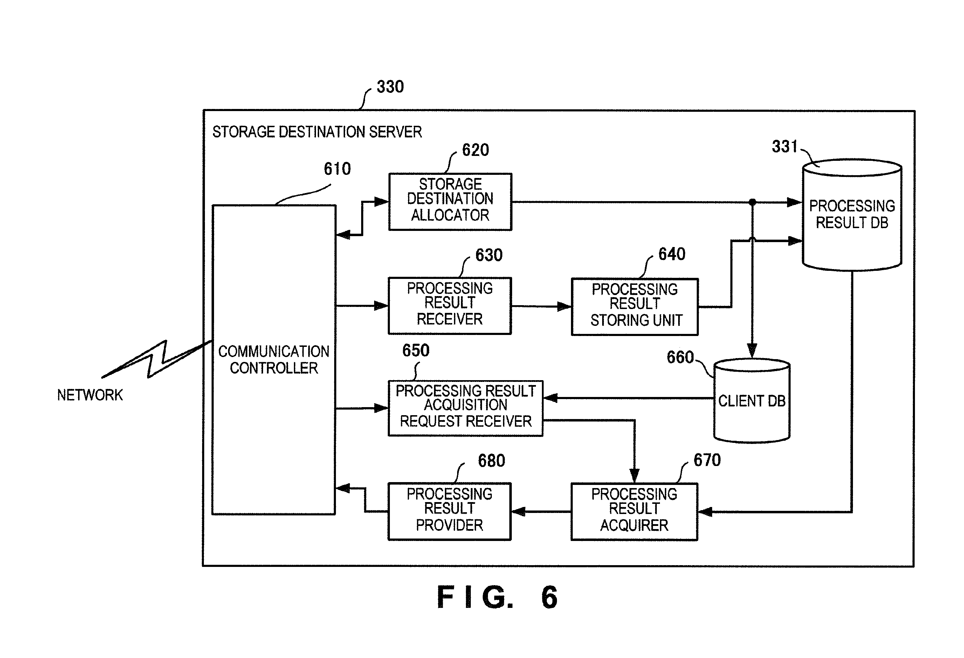

Fig. 6 is a block diagram showing the functional arrangement of the storage destination server 330 according to this embodiment.

The storage destination server 330 includes a communication controller 610 that communicates with another server or client apparatus via the network 360. A storage destination allocator 620 exchanges communication with the cloud server 320 and allocates a storage destination in the processing result DB 331. In this example, the storage destination is set to be accessible by a URL. The storage destination allocator 620 also holds a client ID and authentication information of the client that has requested, which are received from the cloud server 320, in a client DB 660 in association with the storage area of the processing result DB 331.

When the cloud server 320 completes requested information processing, a processing result receiver 630 receives the transmitted processing result together with the storage destination area. A processing result storing unit 640 stores the processing result received from the cloud server 320 in the storage destination area allocated in the processing result DB 331 in advance.

A processing result acquisition request receiver 650 receives a processing result acquisition request from the client apparatuses 311 to 316 that want to acquire the processing result together with access information (URL in this example) representing the storage destination, the client ID, and the authentication information. If the client ID matches, and authentication is possible, a processing result acquirer 670 acquires a processing result corresponding to the client ID from the processing result DB 331. A processing result provider 680 provides the processing result to the client apparatuses 311 to 316 that have requested processing result acquisition.

### «Functional Arrangement of Client Apparatus»

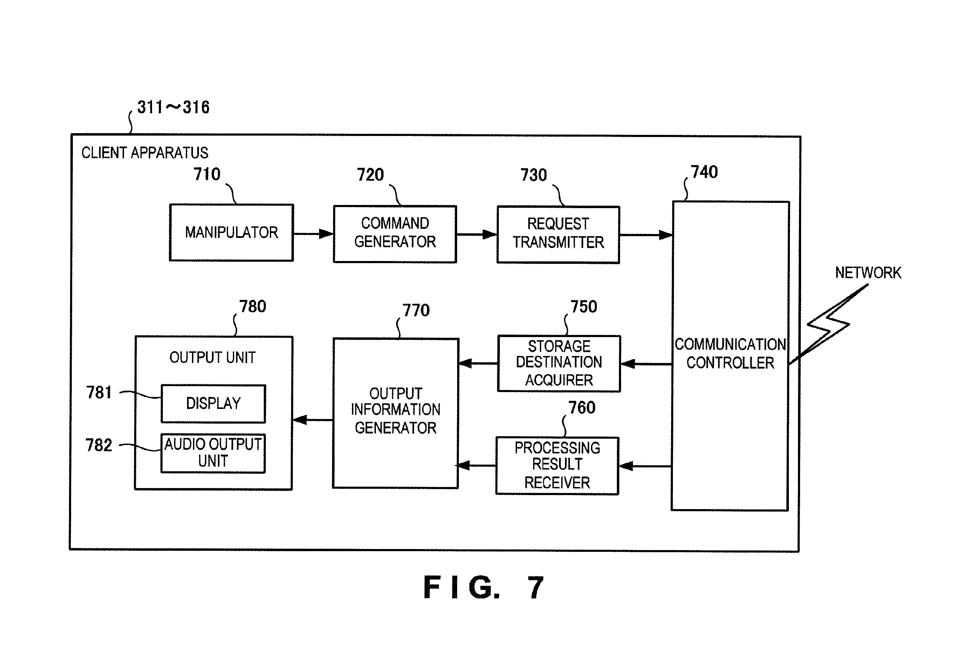

Fig. 7 is a block diagram showing the functional arrangement of the client apparatuses 311 to 316 according to this embodiment.

Each of the client apparatuses 311 to 316 includes a manipulator 710 formed from a touch panel, a keyboard, and the like, and a display 781 and an audio output unit 782 which serve as an output unit 780 that outputs information to the client. Note that although the client apparatus also has other input/output units such as a microphone, only input/output units associated with the embodiment are illustrated in Fig. 7.

A client instruction input from the manipulator 710 is sent to a command generator 720, and a request command to be transmitted to the cloud server 320 or the storage destination server 330 is generated. In this example, an information processing request command for the cloud server 320 and a processing result acquisition command for the storage destination server 330 are generated. The commands may be generated by clicking the icon of a person, as shown in Fig. 2. A request transmitter 730 transmits the request of information processing to the cloud server 320 or the processing result demand to the storage destination server 330 via the network 360 by sending a request message including the generated command from a communication controller 740.

A storage destination acquirer 750 receives, as a response to the request to the cloud server 320, a processing result storage destination from the cloud server 320 as the request destination of information processing via the communication controller 740. That is, the storage destination acquirer 750 receives access information used to access the storage destination without intervention of the cloud server 320. A processing result receiver 760 receives, as a response to the request to the storage destination server 330, a processing result from the storage destination server 330 as the information processing result storage destination via the communication controller 740.

An output information generator 770 generates display data or audio data representing output information from the data received by the storage destination acquirer 750 or the processing result receiver 760. The output unit 780 outputs the output information generated by the output information generator 770. For example, when a response from the cloud server 320 is received, the URL of the storage destination is displayed together with the icon of a sleeping person. When a response from the storage destination server 330 is received, the processing result is displayed together with the icon of a waking person.

Note that although a client apparatus including both the storage destination acquirer 750 and the processing result receiver 760 has been described with reference to Fig. 7, a client apparatus including only one of the functions is also possible.

### (Client Apparatus)

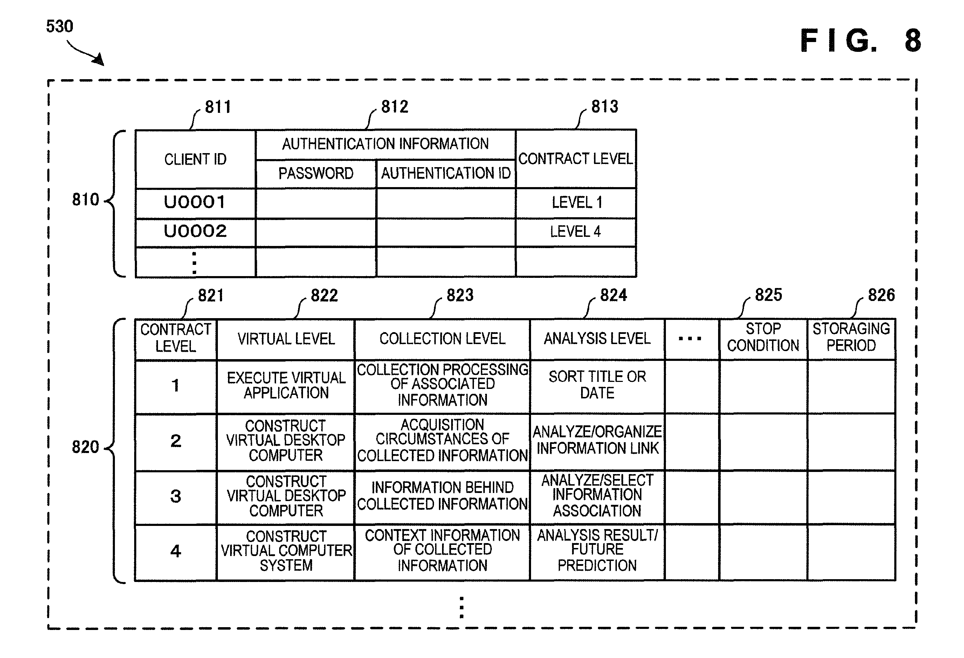

Fig. 8 is a view showing the arrangement of the client DB 530 according to this embodiment. Note that the arrangement of the client DB 530 shown in Fig. 8 is merely an example, and is not limited to this example.

The client DB 530 includes a client information DB 810 that stores client information, and a contract level DB 820 that holds the contract levels of clients.

The client information DB 810 stores authentication information 812 such as a password and an authentication ID, and a contract level 813 that also represents the service level of the client in the cloud server 320 in association with a client ID 811.

The contract level DB 820 stores, in association with a contract level 821, a virtual level 822, an information collection level 823, and a collected information analysis level 824 that are the contents of the contract. The contract level DB 820 also stores a stop condition 825 of requested information processing and a storage period 826 of a processing result in the storage destination server 330 in association with the contract level 821. The stop condition 825 can be, for example, the upper limit of the processing time, the upper limit of the used memory capacity, or the like.

### (Application DB)

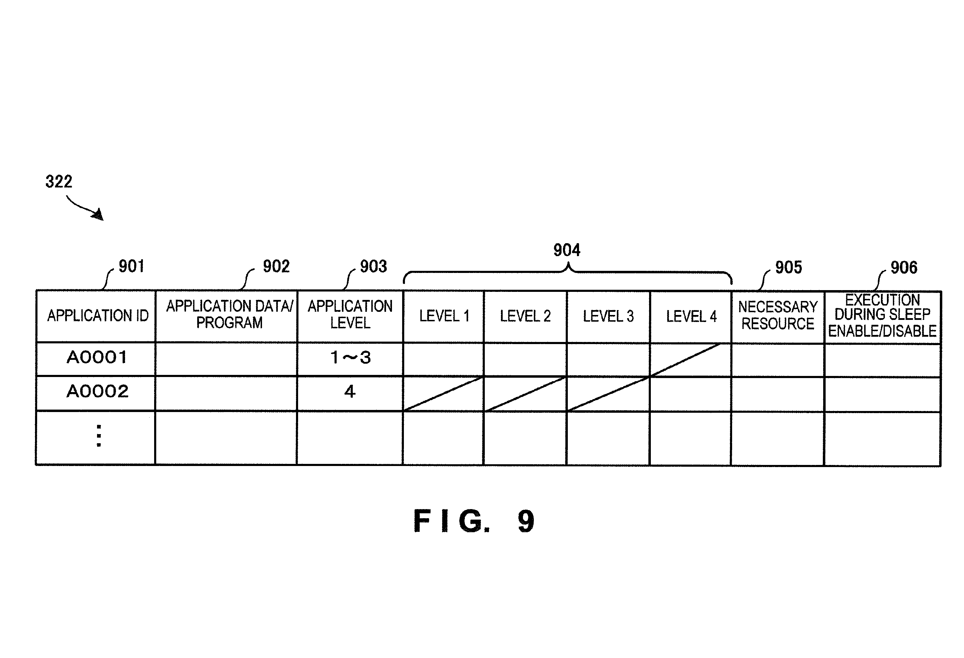

Fig. 9 is a view showing the arrangement of the application DB 322 according to this embodiment. Note that the arrangement of the application DB 322 shown in Fig. 9 is merely an example, and is not limited to this example.

The application DB 322 stores an application data/program 902, an application level 903, an applied level 904, a resource 905 necessary to execute an application, and sleep execution enable/disable 906 in association with an application ID 901.

The application level 903 here sets at least one of the contract levels shown in Fig. 8 at which the application is used. For example, an application "A0001" is used at contract levels 1 to 3 but not at contract level 4. On the other hand, an application "A0002" is used not at contract levels 1 to 3 but at contract level 4. The application "A0001" can be assumed to perform processing of low image quality, and the application "A0002" can be assumed to perform processing of high image quality.

The necessary resource 905 is also associated with the execution during sleep enable/disable 906. For example, when the necessary resource 905 includes a constituent element of a client apparatus, communication disconnection of the client apparatus leads to stop of the application unless an alternate function is ensured. Hence, application execution is impossible during sleep of the client apparatus of this example.

### (Processing Result DB)

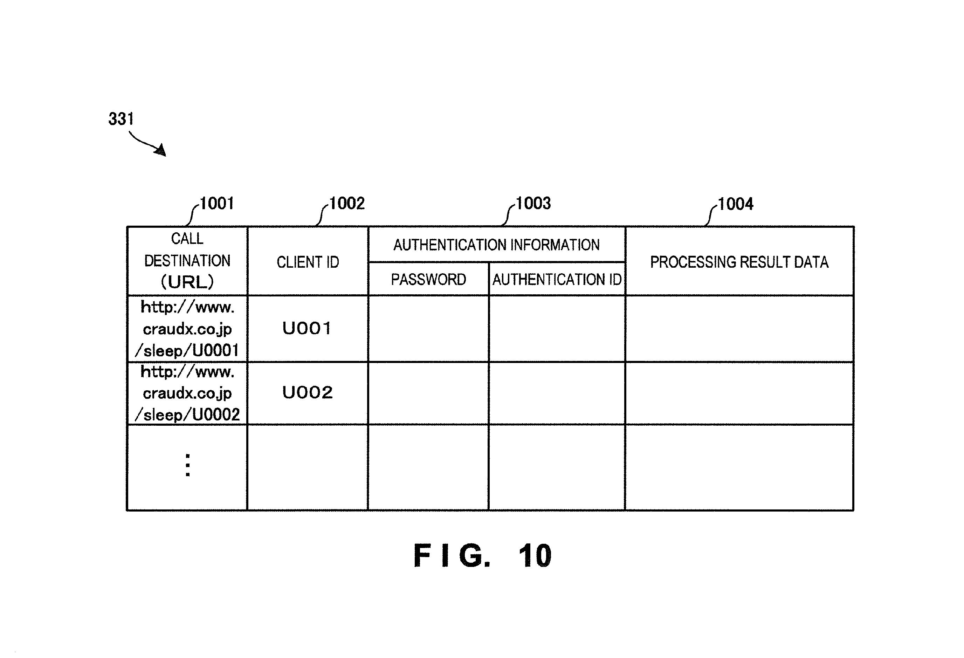

Fig. 10 is a view showing the arrangement of the processing result DB 331 according to this embodiment. Note that the arrangement of the processing result DB 331 shown in Fig. 10 is merely an example, and is not limited to this example.

The processing result DB 331 stores a client ID 1002, authentication information 1003 including a password and an authentication ID, and processing result data 1004 in association with a URL that is a call destination 1001 of a processing result.

### «Hardware Arrangement of Cloud Server»

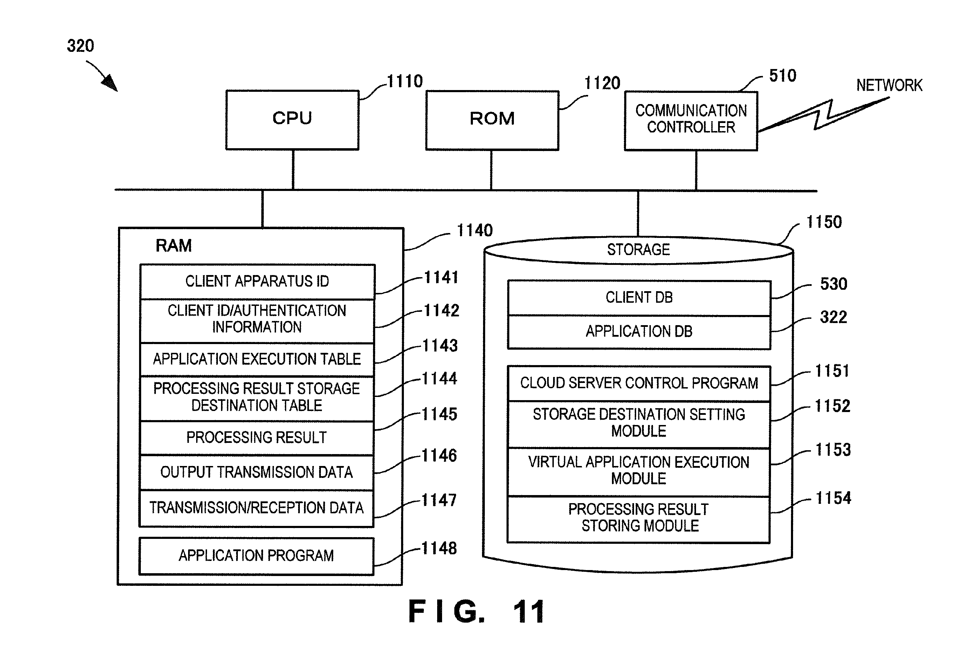

Fig. 11 is a block diagram showing the hardware arrangement of the cloud server 320 according to this embodiment.

Referring to Fig. 11, a CPU 1110 is a processor for arithmetic control, and implements each functional component of the cloud server 320 shown in Fig. 5 by executing a program. A ROM 1120 stores initial data, permanent data of programs and the like, and programs. The communication controller 510 is a communication controller, and in this embodiment, communicates with the client apparatuses 311 to 316, the storage destination server 330, or various kinds of information providing servers via the network 360. Note that the number of CPUs 1110 is not limited to one, and the CPU 1110 may include a plurality of CPUs or a GPU (Graphics Processing Unit) for image processing.

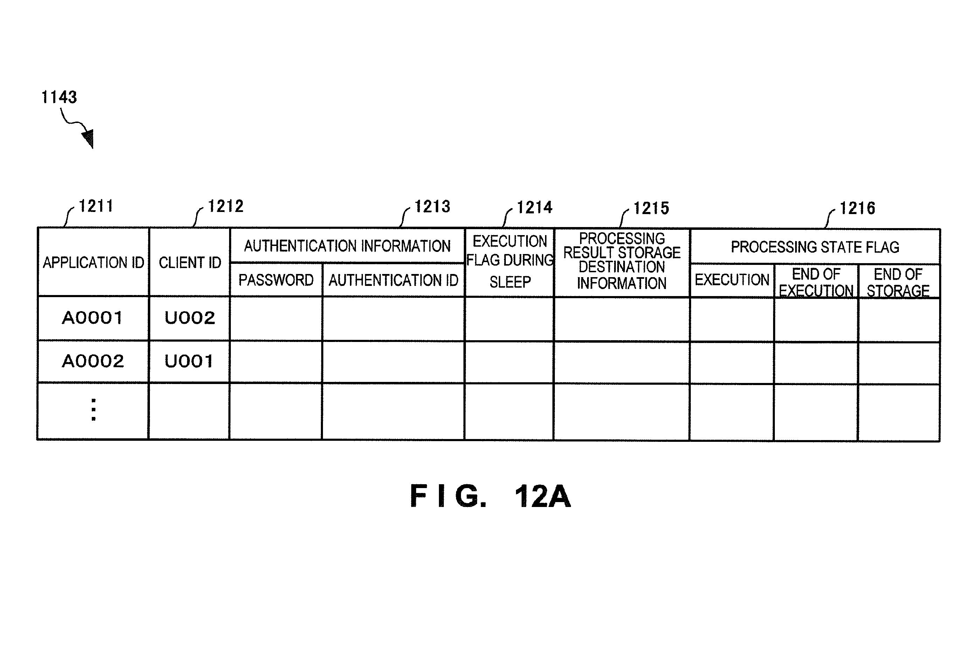

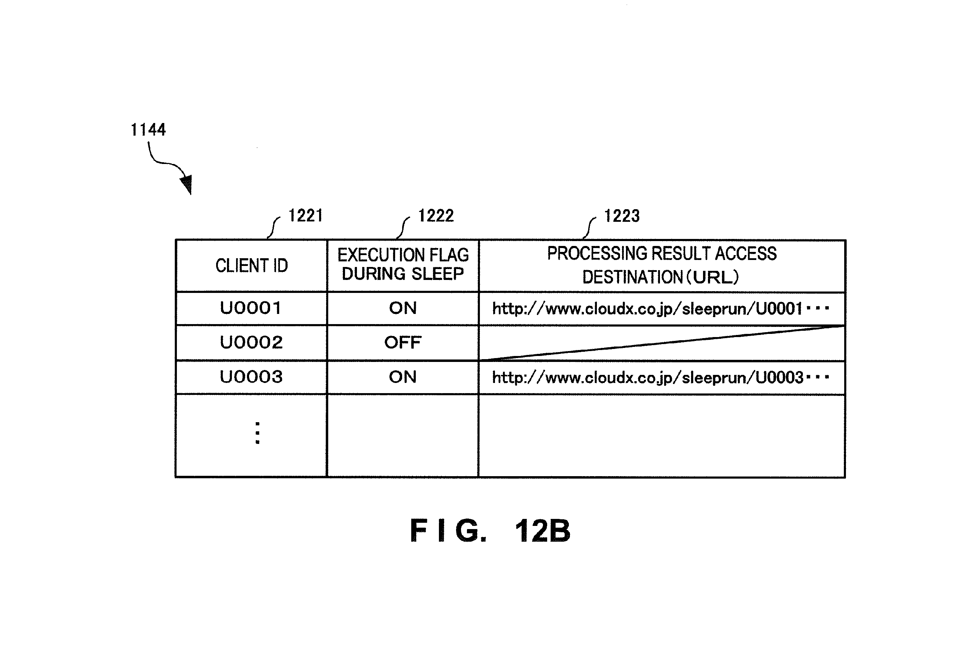

A RAM 1140 is a random access memory used by the CPU 1110 as a work area for temporary storage. An area to store data necessary for implementation of the embodiment is allocated to the RAM 1140. A client apparatus ID 1141 is the identifier of a client apparatus under communication. Client ID/authentication information 1142 is the data of the client ID and authentication information of the client that has requested information processing. An application execution table 1143 is a table that manages execution of an application that implements requested processing (see Fig. 12A). A processing result storage destination table 1144 is a table that manages a storage destination to store a processing result (see Fig. 12B). A processing result 1145 is the data of a processing result obtained by executing requested processing. Output transmission data 1146 is data that transmits the processing result 1145 to a request source. Transmission/reception data 1147 is data to be transmitted/received via the communication controller 510. An application program 1148 is a program that executes an application currently being processed.

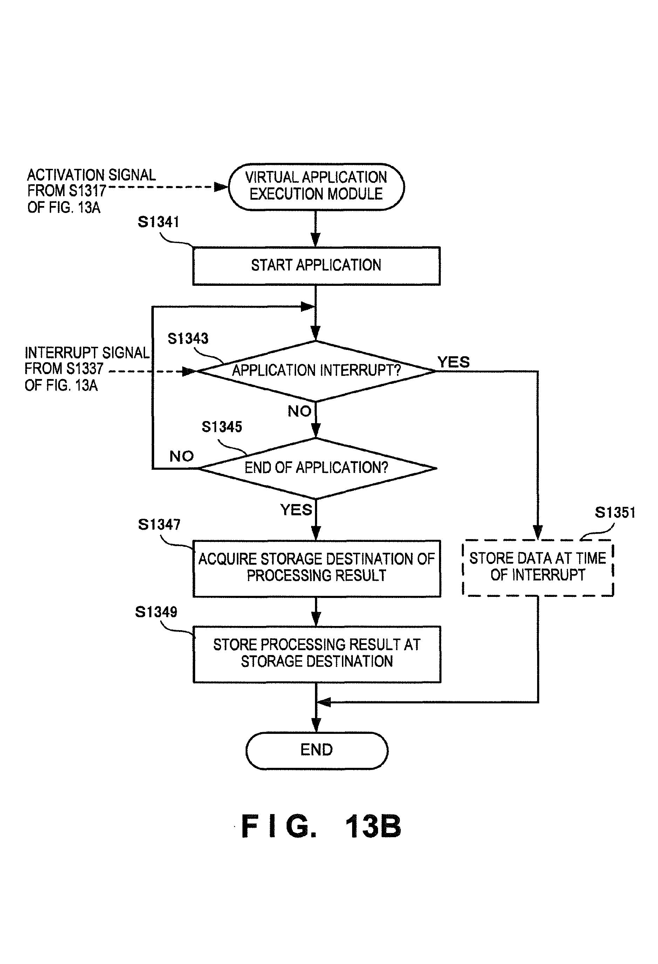

A storage 1150 stores databases, various kinds of parameters, and following data and programs necessary for implementation of the embodiment. The client DB 530 is the database shown in Fig. 8. The application DB 322 is the database shown in Fig. 9. The storage 1150 stores the following programs. A cloud server control program 1151 is a program that controls the entire cloud server 320. A storage destination setting module 1152 is a module that sets a processing result storage destination and notifies a client apparatus as a request source of it in the cloud server control program 1151. A virtual application execution module 1153 is a module that virtually executes an application on behalf of a client apparatus in the cloud server control program 1151 (see Fig. 13B). A processing result storing module 1154 is a module that stores a processing result in the storage destination server 330 in the cloud server control program 1151.

Note that Fig. 11 shows data and programs associated with this embodiment but not general-purpose data and programs in the cloud server.

### (Application Execution Table)

Fig. 12A is a view showing the arrangement of the application execution table 1143 according to this embodiment.

The application execution table 1143 stores a client ID 1212, authentication information 1213 including a password and an authentication ID, an execution flag during sleep 1214, processing result storage destination information 1215, and a processing state flag 1216 of an application in association with an application ID 1211. Note that the processing state flag 1216 of an application represents, for example, execution of an application, the end of execution of an application, or the end of storage of a processing result.

### (Processing Result Storage Destination Table)

Fig. 12B is a view showing the arrangement of the processing result storage destination table 1144 according to this embodiment.

The processing result storage destination table 1144 stores an execution flag during sleep 1222 and a processing result access destination (URL) 1223 in association with a client ID 1221. For current information processing whose request source is a client "U0002", the processing result access destination (URL) 1223 is not set because the sleep execution flag 1222 is "OFF".

Note that the processing result storage destination table 1144 can be set for each request from clients, as in this example, but may be decided for each client and stored in the storage 1150 in advance as a processing result storage destination DB.

### «Processing Procedure of Cloud Server»

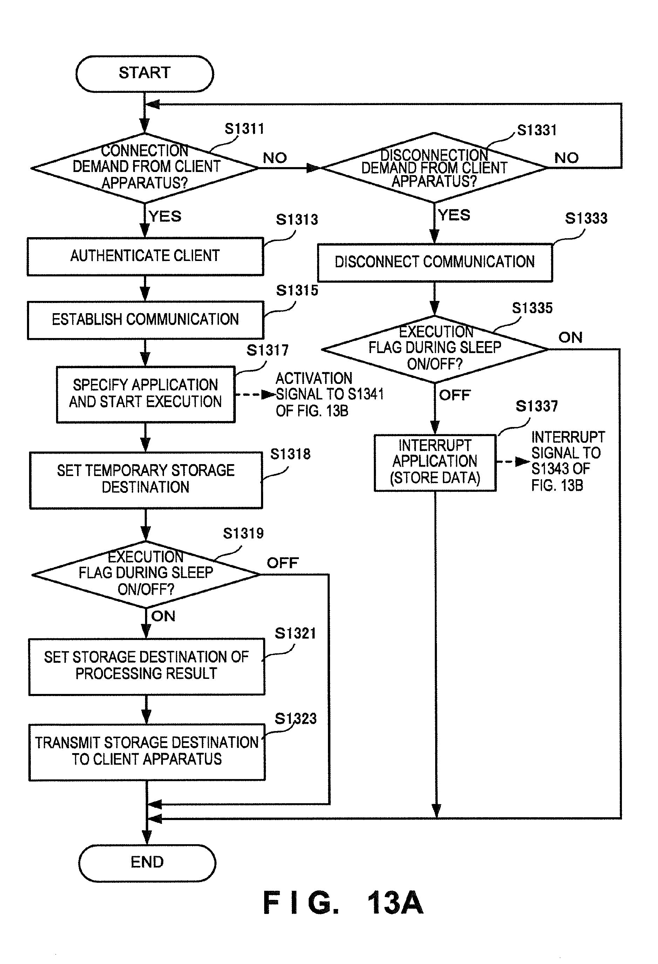

Fig. 13A is a flowchart showing the processing procedure of the cloud server 320 according to this embodiment. This flowchart is executed by the CPU 1110 using the RAM 1140 and implements the functional components shown in Fig. 5. Note that the flowchart of Fig. 13A starts in accordance with occurrence of an event such as reception from a client apparatus in the cloud server 320.

First, in step S1311, the cloud server 320 determines whether a connection demand from a client apparatus is received. In step S1331, the cloud server 320 determines whether a disconnection demand from a client apparatus is received.

Upon receiving a connection demand, the cloud server 320 advances to step S 1313 and performs client authentication. In step S1315, the cloud server 320 establishes communication. In step S1317, the cloud server 320 specifies an application to be executed, and outputs an activation signal so as to start executing the application (see S1341 of Fig. 13B). In step S1318, the cloud server 320 sets a temporary storage destination to temporarily store a result halfway through processing in the absence of communication disconnection. If the application ends without communication disconnection, the processing result at the temporary storage destination is held.

In step S 1319, the cloud server 320 determines whether the execution flag during sleep is ON or OFF. If the sleep execution flag is ON, the cloud server 320 advances to step S1321 and sets a processing result storage destination in the storage destination server 330. In step S 1323, the cloud server 320 transmits the access information of the set storage destination to the client apparatus. If the sleep execution flag is OFF, the cloud server 320 ends the application start processing.

On the other hand, upon receiving a disconnection demand, the cloud server 320 advances to step S1333 and disconnects the communication with the client apparatus that has requested information processing. In step S1335, the cloud server 320 determines whether the execution flag during sleep is ON or OFF. If the sleep execution flag is OFF, the cloud server 320 advances to step S1337 and outputs an interrupt signal to interrupt or stop execution of the application (see S 1343 of Fig. 13B). If the sleep execution flag is ON, the cloud server 320 continues execution of the application without interrupting it.

### (Application Execution Module)

Fig. 13B is a flowchart showing the processing procedure of the virtual application execution module 1153 according to this embodiment.

According to the activation signal to start executing the application in step S1317 of Fig. 13A, the virtual application execution module starts. First, in step S1341, the cloud server 320 starts executing the application. In step S 1343 the cloud server 320 determines whether a signal to interrupt or stop the application is received (see S1337 of Fig. 13A). Upon receiving the signal to interrupt or stop the application, the cloud server 320 stores data at the time of interrupt in step S1351 as an option, and ends execution of the application.

If the signal to interrupt or stop the application is not received, the cloud server 320 continues execution of the application until its end in step S1345. In this embodiment, when the client apparatus instructs to turn on the sleep execution flag, the application is continuously executed independently of communication disconnection.

When the application ends, the cloud server 320 acquires the processing result storage destination set in S1321 of Fig. 13A in step S1347. In step S1349, the cloud server 320 stores the processing result at the storage destination in the storage destination server 330. When no communication disconnection occurs midway, the processing result is stored at the temporary storage destination set in step S1318 of Fig. 13A.

### «Hardware Arrangement of Storage Destination Server»

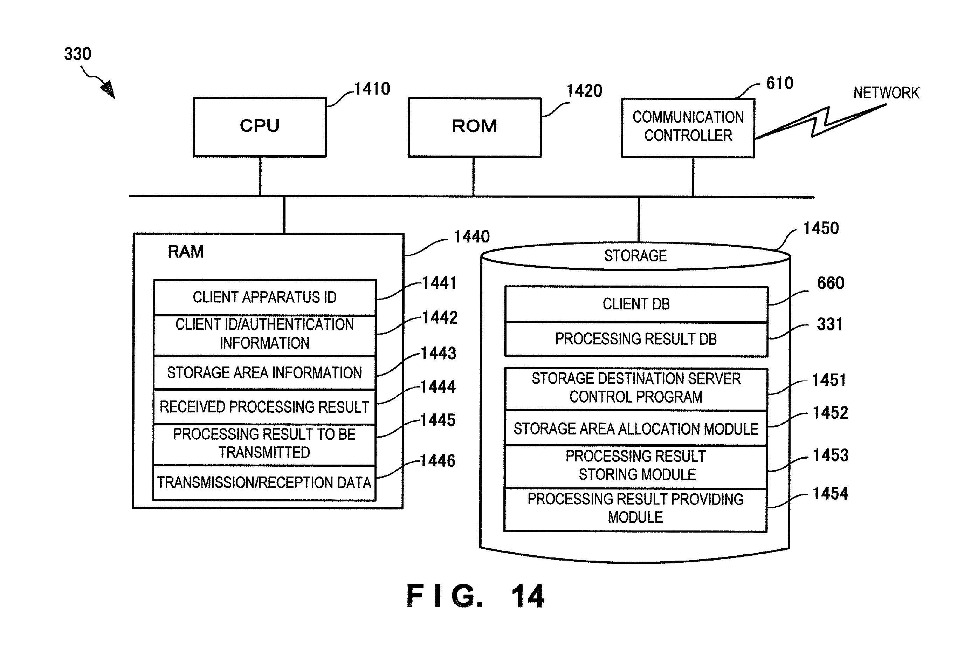

Fig. 14 is a block diagram showing the hardware arrangement of the storage destination server 330 according to this embodiment.

Referring to Fig. 14, a CPU 1410 is a processor for arithmetic control, and implements each functional component of the storage destination server 330 shown in Fig. 6 by executing a program. A ROM 1420 stores initial data, permanent data of programs and the like, and programs. The communication controller 610 is a communication controller, and in this embodiment, communicates with the client apparatuses 311 to 316 or the cloud server 320 via the network 360. Note that the number of CPUs 1410 is not limited to one, and the CPU 1410 may include a plurality of CPUs or a GPU for image processing.

A RAM 1440 is a random access memory used by the CPU 1410 as a work area for temporary storage. An area to store data necessary for implementation of the embodiment is allocated to the RAM 1440. A client apparatus ID 1441 is the identifier of a client apparatus under communication. Client ID/authentication information 1442 is the data of the client ID and authentication information of the client that has requested storage of information processing. Storage area information 1443 is the information of a processing result storage area allocated in the processing result DB 331. A received processing result 1444 is the data of a processing result received from the cloud server 320. A processing result 1445 to be transmitted is the data of a processing result to be transmitted to a client apparatus in response to access by access information from the client apparatus. Transmission/reception data 1446 is data to be transmitted/received via the communication controller 610.

A storage 1450 stores databases, various kinds of parameters, and following data and programs necessary for implementation of the embodiment. The client DB 660 is a database that stores the information of a client received from the cloud server 320 with an allocated storage destination. The client DB 660 stores the client information DB 810 shown in Fig. 8. The processing result DB 331 is the database shown in Fig. 10. The storage 1450 stores the following programs. A storage destination server control program 1451 is a program that controls the entire storage destination server 330. A storage area allocation module 1452 is a module that allocates a processing result storage area in correspondence with a client in the storage destination server control program 1451. A processing result storing module 1453 is a module that stores a processing result from the cloud server 320 in correspondence with a client in the storage destination server control program 1451. A processing result providing module 1454 is a module that provides a processing result to a client apparatus that has demanded in the storage destination server control program 1451.

Note that Fig. 14 shows data and programs associated with this embodiment but not general-purpose data and programs in the storage destination server.

### «Processing Procedure of Storage Destination Server»

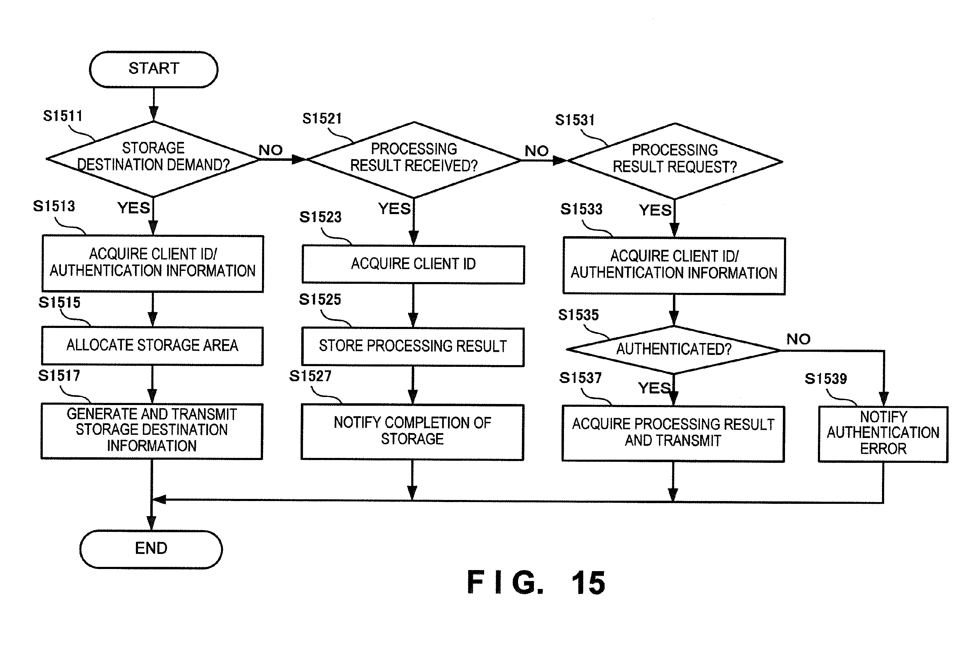

Fig. 15 is a flowchart showing the processing procedure of the storage destination server 330 according to this embodiment. This flowchart is executed by the CPU 1410 using the RAM 1440 and implements the functional components shown in Fig. 6. Note that the flowchart of Fig. 15 starts in accordance with occurrence of an event such as reception from the cloud server 320 or a client apparatus in the storage destination server 330.

First, in step S1511, the storage destination server 330 determines whether a storage destination demand from the cloud server 320 is received. In step S1521, the storage destination server 330 determines whether a processing result from the cloud server 320 is received. In step S1531, the storage destination server 330 determines whether a processing result demand from a client apparatus is received.

Upon receiving a storage destination demand from the cloud server 320, the storage destination server 330 advances to step S1513 and acquires, from the cloud server 320, the client ID and authentication information of the client for which a processing result is to be stored. In step S1515, the storage destination server 330 allocates the storage destination. In step S 1517, the storage destination server 330 generates the storage destination information of the allocated storage area and transmits it to the cloud server 320.

Upon receiving a processing result from the cloud server 320, the storage destination server 330 advances to step S 1523 and acquires the client ID of the client corresponding to the processing result from the cloud server 320. The storage destination server 330 stores the processing result received from the cloud server 320 in the storage area corresponding to the client in the processing result DB 331. When storage of the processing result is completed, the storage destination server 330 notifies the cloud server 320 of the completion of storage in step S 1527.

Upon receiving a processing result demand from a client apparatus, the storage destination server 330 advances to step S 1533 and acquires a client ID and authentication information included in the request message. In step S1535, the storage destination server 330 authenticates the client. If the client is authenticated as a result, the storage destination server 330 advances to step S1537, acquires the processing result from the storage area corresponding to the client in the processing result DB 331, and transmits it to the client apparatus manipulated by the client. On the other hand, if the client cannot be authenticated, the storage destination server 330 advances to step S1539, and notifies the client apparatus manipulated by the client of an authentication error.

### «Hardware Arrangement of Client Apparatus»

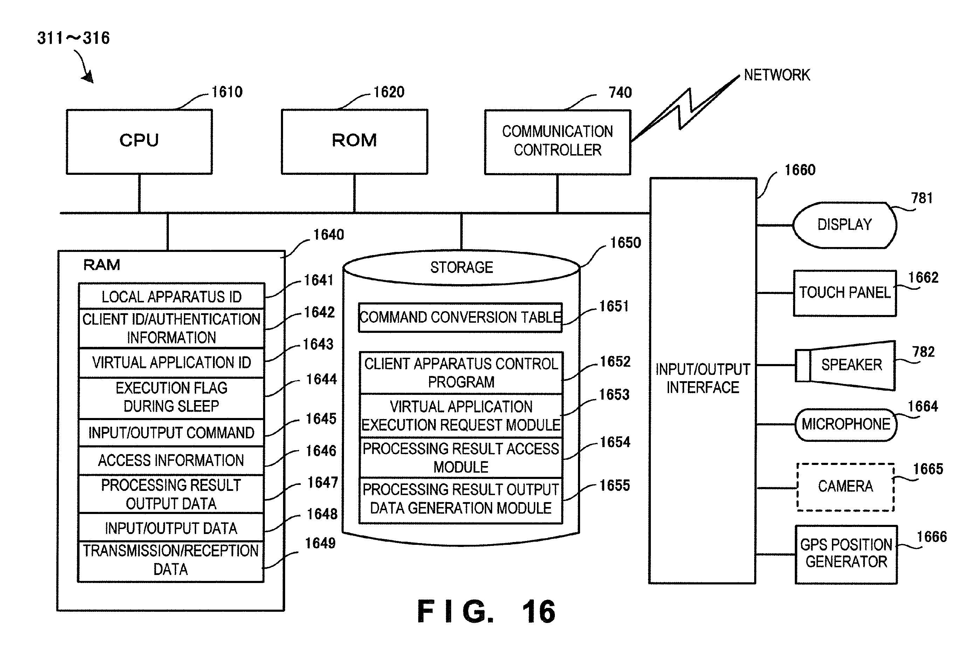

Fig. 16 is a block diagram showing the hardware arrangement of the client apparatuses 311 to 316 according to this embodiment.

Referring to Fig. 16, a CPU 1610 is a processor for arithmetic control, and implements each functional component of the client apparatuses 311 to 316 by executing a program. A ROM 1620 stores initial data, permanent data of programs and the like, and programs. The communication controller 740 is a communication controller, and in this embodiment, communicates with the cloud server 320 or the storage destination server 330 via the network. Note that the number of CPUs 1610 is not limited to one, and the CPU 1610 may include a plurality of CPUs or a GPU for image processing.

A RAM 1640 is a random access memory used by the CPU 1610 as a work area for temporary storage. An area to store data necessary for implementation of the embodiment is allocated to the RAM 1640. A local apparatus ID 1641 is the identifier of the local client apparatus. Client ID/authentication information 1642 is the data of a client ID and authentication information input by the client. A virtual application ID 1643 is the identifier of an application that executes information processing requested by the client to be done by the cloud server 320. An execution flag during sleep 1644 is a flag that indicates a client instruction to execute an application even during communication disconnection. An input/output command 1645 is a command to be transmitted to the cloud server 320 or the storage destination server 330. The input/output command 1645 is generated by a command conversion table 1651 from an icon click on the display screen. Access information 1646 is information notified by the cloud server 320 and used to access the storage destination server 330. The access information 1646 includes a URL. Processing result output data 1647 is data used to display a processing result from the storage destination server 330 on a display 671 or output an audio from a speaker 672. Input/output data 1648 indicates input/output data to be input/output via an input/output interface 1660. Transmission/reception data 1649 is transmission/reception data to be transmitted/received via the communication controller 740.

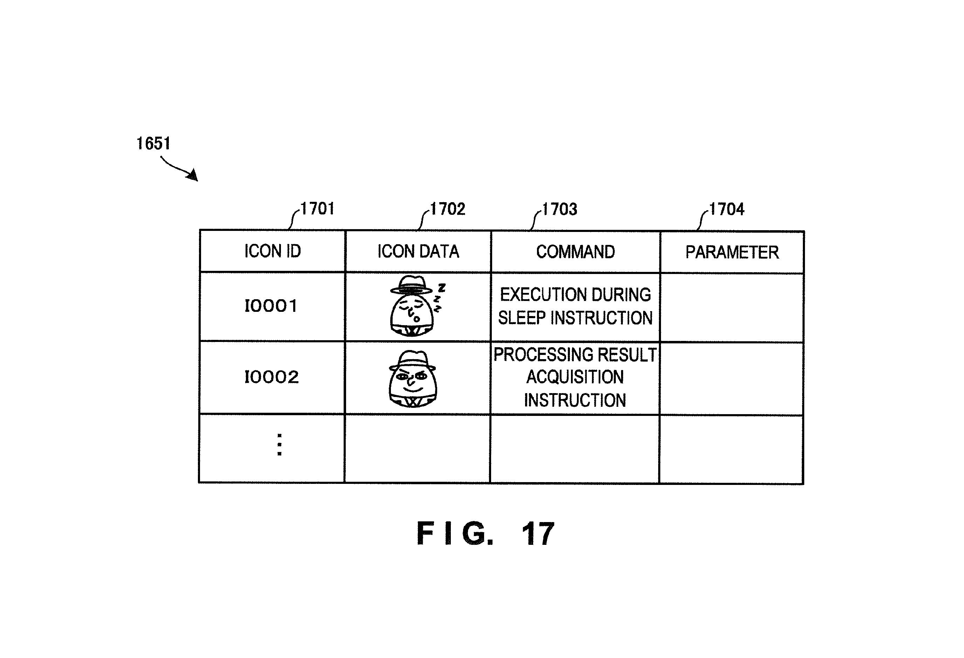

A storage 1650 stores databases, various kinds of parameters, and following data and programs necessary for implementation of the embodiment. The command conversion table 1651 is a table used to convert an icon click on the display screen into the input/output command 1645 (see Fig. 17). Note that an audio input from a microphone 1664 may be converted into a command. The storage 1650 stores the following programs. A client apparatus control program 1652 is a program that controls the entire client apparatuses 311 to 316. A virtual application execution request module 1653 is a module configured to request the cloud server 320 to virtually execute an application in the client apparatus control program 1652. A processing result access module 1654 is a module configured to acquire a processing result from the storage destination server 330 based on access information in the client apparatus control program 1652. A processing result output data generation module 1655 is a module configured to generate output data so as to display a processing result acquired from the storage destination server 330 or output the processing result an audio in the client apparatus control program 1652.

The input/output interface 1660 interfaces input/output data from/to input/output devices. The display 781, a touch panel 1662 serving as the manipulator, and a speaker and the microphone 1664 serving as the audio output unit 782 are connected to the input/output interface 1660. In addition, a camera 1665 may be connected to the input/output interface 1660. The input/output devices are not limited to the above examples. In addition, a GPS (Global Positioning System) position generator 1666 is included to acquire a current position based on signals from GPS satellites.

Note that Fig. 16 shows data and programs associated with this embodiment but not general-purpose data and programs in the client apparatuses.

### (Command Conversion Table)

Fig. 17 is a view showing the arrangement of the command conversion table 1651 according to this embodiment.

The command conversion table 1651 stores icon data 1702, a command 1703 after conversion, and another parameter 1704 in association with an icon ID 1701 to be displayed on the display 671. Nota that although Fig. 17 illustrates the icon (sleeping person) of an execution during sleep instruction and the icon (waking person) of a processing result acquisition instruction, the icons are not limited to those. The command conversion table 1651 simplifies the manipulation of the client apparatus according to this embodiment and allows the client to easily manipulate.

### «Processing Procedure of Client Apparatus»

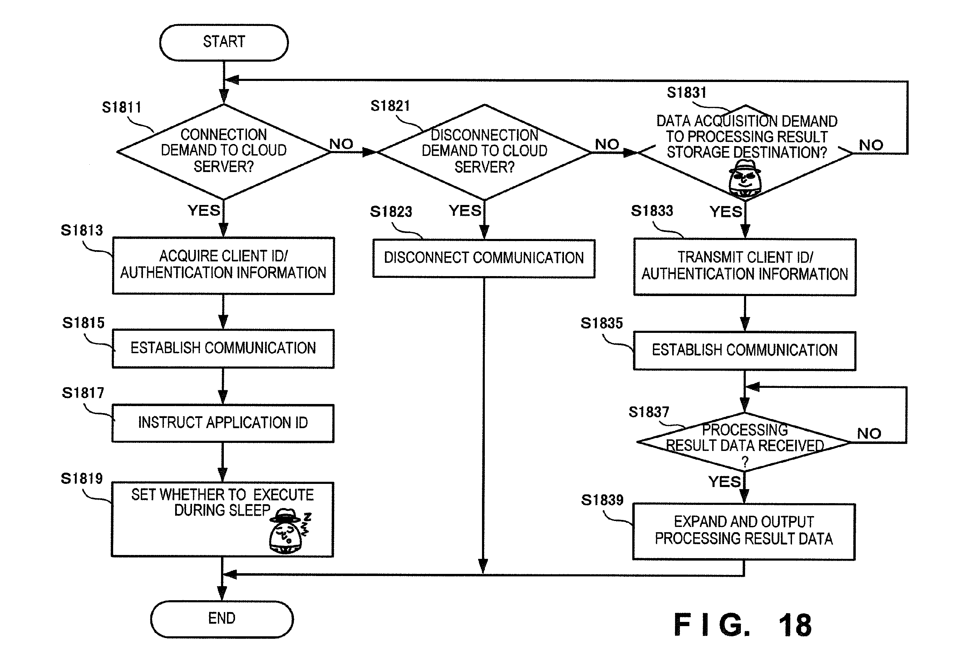

Fig. 18 is a flowchart showing the processing procedure of the client apparatuses 311 to 316 according to this embodiment. This flowchart is executed by the CPU 1610 using the RAM 1640 and implements the functional components shown in Fig. 7. Note that the flowchart of Fig. 18 starts in accordance with occurrence of an event of generation of a demand to the cloud server 320 or an event of reception from the storage destination server 330 in the client apparatus.

First, in step S1811, the client apparatus determines whether a connection demand to the cloud server 320 is generated. In step S1821, the client apparatus determines whether a disconnection demand to the cloud server 320 is generated. In step S1831, the client apparatus determines whether a demand to acquire processing result data from the storage destination server 330 is generated. Note that the processing result data acquisition demand is preferably executed simply by clicking the illustrated icon.

If a connection demand to the cloud server 320 is generated, the client apparatus advances to step S1813 and acquires the client ID and authentication information based on a client input. In step S1815, the client apparatus establishes communication with the cloud server 320. In step S1817, the client apparatus instructs the application ID of information processing that the cloud server 320 is to be requested to execute. At this time, the client apparatus sets in step S 1819 whether to set execution during sleep by clicking the illustrated icon or not.

If a disconnection demand to the cloud server 320 is generated, the client apparatus advances to step S1823 and disconnects communication with the cloud server 320.

If a processing result data acquisition demand to the storage destination server 330 is generated, the client apparatus advances to step S 1833 and acquires the client ID and authentication information based on a client input. In step S1835, the client apparatus establishes communication with the storage destination server 330. In step S1837, the client apparatus waits for processing result data reception from the storage destination server 330. Upon receiving the data, the client apparatus advances to step S1839 and expands and outputs the processing result data.

### [Third Embodiment]

An information processing system according to the third embodiment of the present invention will be described next. The information processing system according to this embodiment is different from the second embodiment in that a time or time zone to execute requested information processing during communication disconnection in a cloud server is selected. The rest of the components and operations is the same as in the second embodiment. Hence, the same reference numerals as in the second embodiment denote the same components and operations, and a detailed description thereof will be omitted.

According to this embodiment, even when communication disconnection occurs after requesting the cloud server to execute information processing, an application can be executed at an appropriate time or in an appropriate time zone, and the processing result can be acquired from any client apparatus at a desired timing. The appropriate time or time zone here includes, for example, a time or time zone of light traffic at night or a time or time zone of low power consumption and low electricity charge. Hence, this system can contribute to energy saving as well.

Note that in this embodiment, three examples of application execution time settings in the cloud server will be described together. However, the execution time can also be set by other conditions.

### «Operation Procedure of Information Processing System»

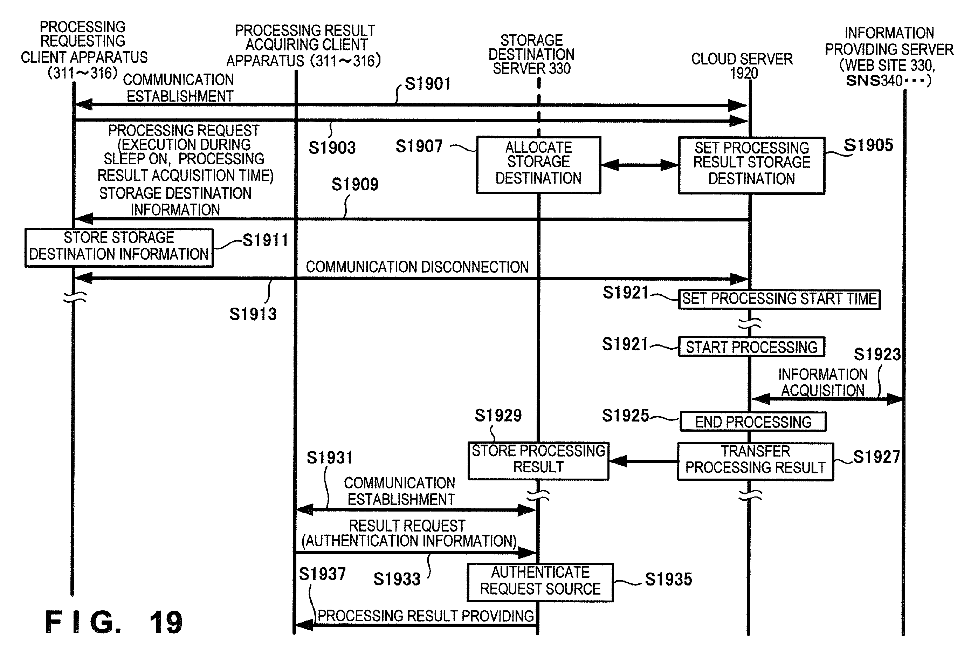

Fig. 19 is a sequence chart showing the operation procedure of the information processing system according to this embodiment. Note that in Fig. 19, several steps are omitted to simplify the description in the same sequence as in Fig. 4 of the second embodiment. See Fig. 4 for the omitted portions.

First, in step S1901, communication between a cloud server 1920 and client apparatuses 311 to 316 that request processing is established. In step S1903, the client apparatuses 311 to 316 request the cloud server 1920 to do processing. This request includes a designation of a time at which the client wants to acquire a processing result in addition to an execution flag during sleep in the ON state. That is, the request instructs sleep execution by which the cloud server 1920 continues processing even when communication is disconnected, and also notifies the cloud server 1920 of the desired time of processing result acquisition.

Instead of immediately starting the requested information processing, in step S1905, the cloud server 1920 sends a client ID and authentication information to a storage destination server 330, requests it to allocate a processing result storage destination, and if allocated, sets the storage destination. In step S1907, the storage destination server 330 allocates the storage destination upon receiving the request from the cloud server 1920.

In step S1909, the cloud server 1920 notifies the client apparatuses 311 to 316 of the request source of the storage destination information. The storage destination information includes a URL. Upon receiving the storage destination information, the client apparatuses 311 to 316 of the request source store the storage destination information in step S1911. In step S1913, the client apparatuses 311 to 316 of the request source disconnect communication with the cloud server 1920. Note that the client apparatus 314 that is a notebook PC, the client apparatus 316 that is a desktop PC, and the like may be powered off after communication disconnection.

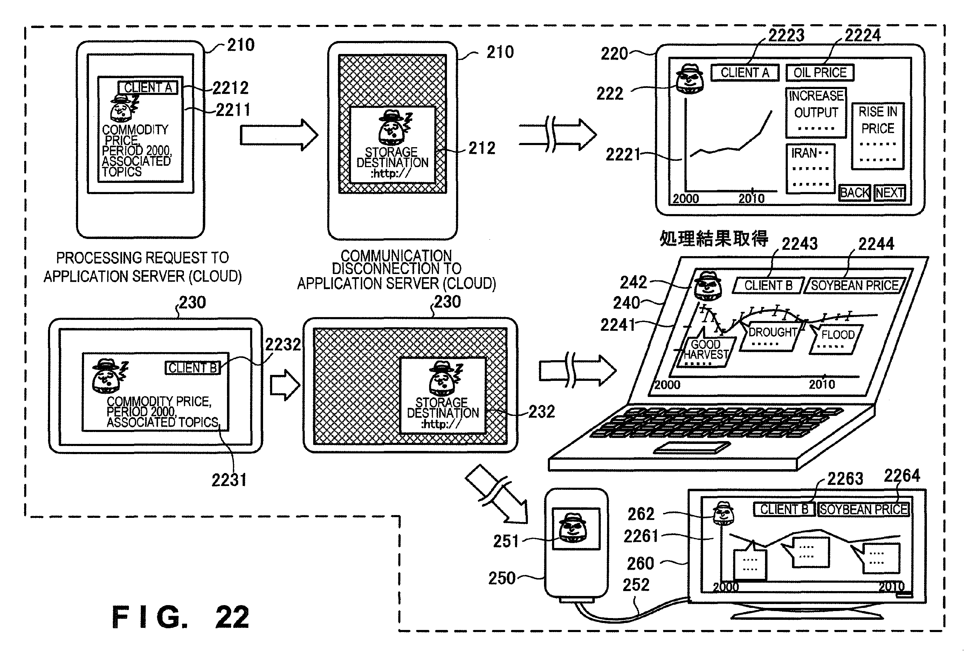

The cloud server 1920 sets an application start time based on the desired processing result acquisition time from the client. Note that this embodiment discloses three setting methods. They will be described later in detail with reference to Figs. 22A to 22C, and suffice to say here that the application start time is set.

After that, the application is not executed until the set start time. At the set start time, the cloud server 1920 starts executing the application in step S 1921. In step S 1923, the cloud server 1920 acquires information from an information providing server as part of the processing. When the requested processing ends in step S1925, the cloud server 1920 transfers the processing result to the storage destination server 330 in step S1927. In step S 1929, the processing result sent from the cloud server 1920 to the storage destination server 330 is stored at the storage destination allocated by the storage destination server 330.

After that, in step S1931, communication between the storage destination server 330 and the client apparatuses 311 to 316 that are different from the client apparatus that has requested and acquire the processing result is established. In this example, the access is done based on a URL. In step S1933, the client apparatuses 311 to 316 that acquire the processing result transmit a processing result acquisition request to the storage destination server 330 together with the client ID and authentication information. In step S1935, the storage destination server 330 authenticates the processing result request source. If authentication is impossible, the processing stops. If the client apparatus is authenticated, in step S1937, the storage destination server 330 provides the processing result to the client apparatuses 311 to 316 that acquire the processing result. Note that the processes of steps S1931 to S1937 can be performed as a series of processes based on simple instructions by the client. For example, the processes are preferably performed only by clicking the icon of a person, as shown in Fig. 2.

As described above, in this embodiment, by sending a processing request to the cloud server together with a desired processing result acquisition time, the processing result can be acquired from any client apparatus at the desired time even when communication disconnection has occurred.

### «Functional Arrangement of Cloud Server»

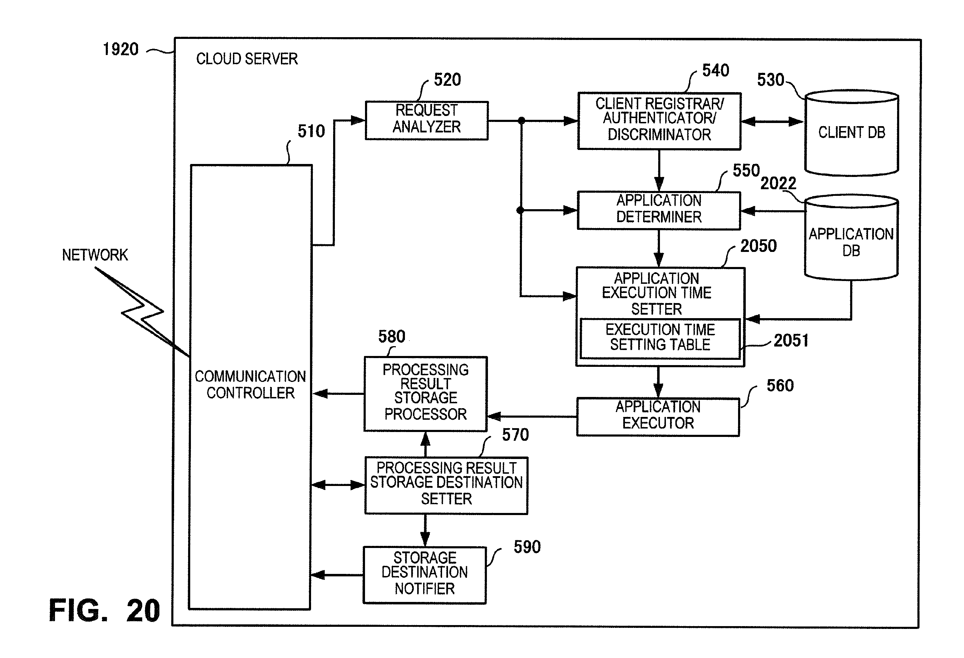

Fig. 20 is a block diagram showing the functional arrangement of the cloud server 1920 according to this embodiment. Note that the same reference numerals as in Fig. 5 of the second embodiment denote the same functional components in Fig. 20, and a description thereof will be omitted.

An application execution time setter 2050 sets an application execution time based on a client's desired time or the environment (load, power consumption and the like) of the cloud server 1920. Note that the application execution time setter 2050 includes an execution time setting table 2051 used to set the execution time. An application DB 2022 basically holds data shown in Fig. 9, and additionally holds information necessary for the embodiment.

### (First Execution Time Setting Table)

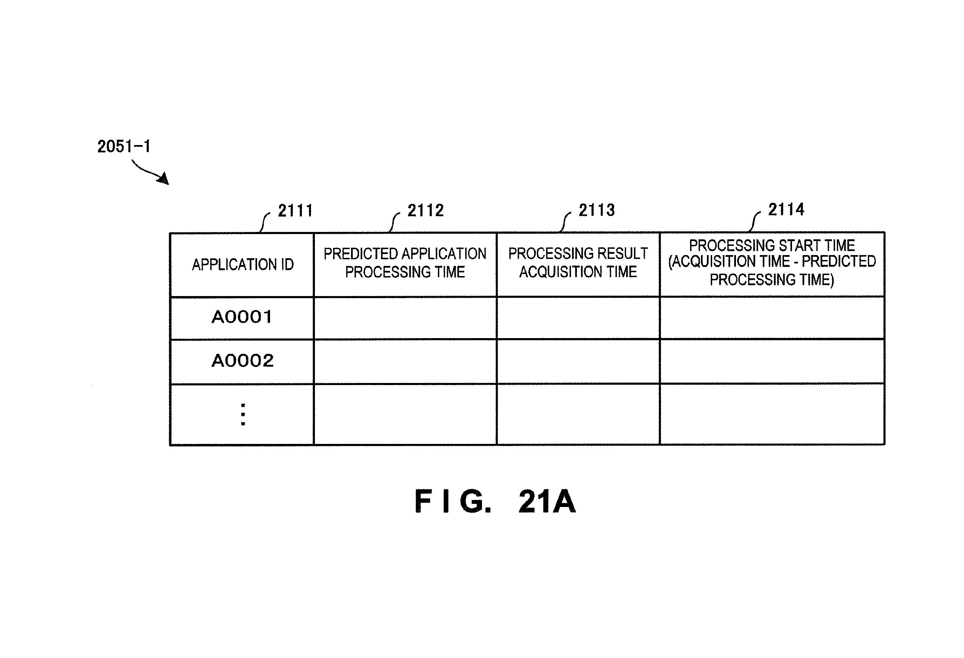

Fig. 21A is a view showing the arrangement of a first execution time setting table 2051-1 according to this embodiment. In this example, the application execution time setter 2050 starts executing an application at a time meeting a desired processing result acquisition time set by a client. Note that Fig. 21A shows data to be further added to the data in Fig. 9.

The first execution time setting table 2051-1 stores a predicted application processing time 2112, a processing result acquisition time 2113, and a processing start time 2114 in association with an application ID 2111. The processing start time 2114 is a time obtained by subtracting the predicted processing time 2112 from the acquisition time 2113. However, somewhat early time is set for the sake of safety. Note that the predicted processing time 2112 is stored in the application DB 2022 in correspondence with the application ID.

The first execution time setting table 2051-1 makes it possible to acquire the processing result of the application at the client's desired time.

### (Second Execution Time Setting Table)

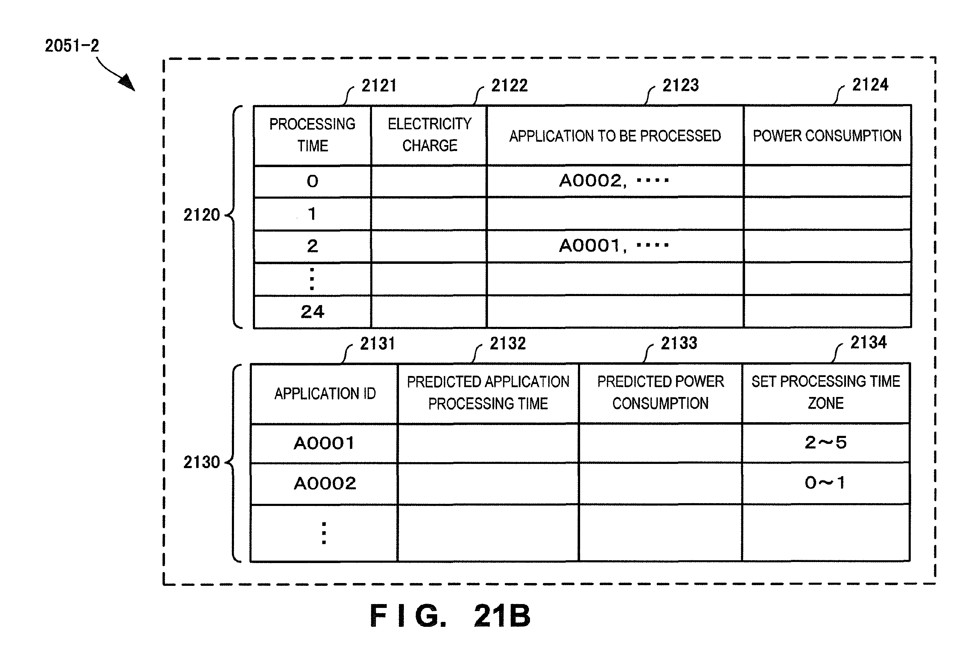

Fig. 21B is a view showing the arrangement of a second execution time setting table 2051-2 according to this embodiment. In this example, the application execution time setter 2050 starts executing an application at a time meeting a desired processing result acquisition time set by a client in consideration of the environment (load, power consumption and the like) of the cloud server 1920. Note that Fig. 21B shows data to be further added to the data in Fig. 9.

The second execution time setting table 2051-2 includes a power consumption prediction table 2120 that stores prediction of throughput or power consumption by a processing time on the upper stage of Fig. 21B, and an execution time zone setting table 2130 used to set the processing time zone of an application based on the predicted power consumption.

In correspondence with a processing time 2121 (hourly in this example), the power consumption prediction table 2120 stores an electricity charge 2122 in the time, an application 2123 to be processed, and power consumption 2124 at the time of application execution. Note that the power consumption needed to execute each application is stored in the application DB 2022. By the power consumption prediction table 2120, the execution times of a plurality of applications are distributed so as to, for example, average the power consumption or minimize the electricity charge. The execution time zone setting table 2130 stores a predicted application processing time 2132, predicted power consumption 2133, and a set processing time zone 2134 in association with an application ID 2131. Note that the predicted processing time 2112 is stored in the application DB 2022 in correspondence with the application ID. By the execution time zone setting table 2130, the processing time zone of each application is set.

Note that although power consumption is taken into consideration in this example, not only the power consumption but also the load of the cloud server 1920, a storage capacity to be used, and the like may be added to the conditions of the processing time zone to be set. As described above, in this example, the execution times of applications are suitably distributed in consideration of the environment of the cloud server 320 by the second execution time setting table 2051-2.

### (Third Execution Time Setting Table)

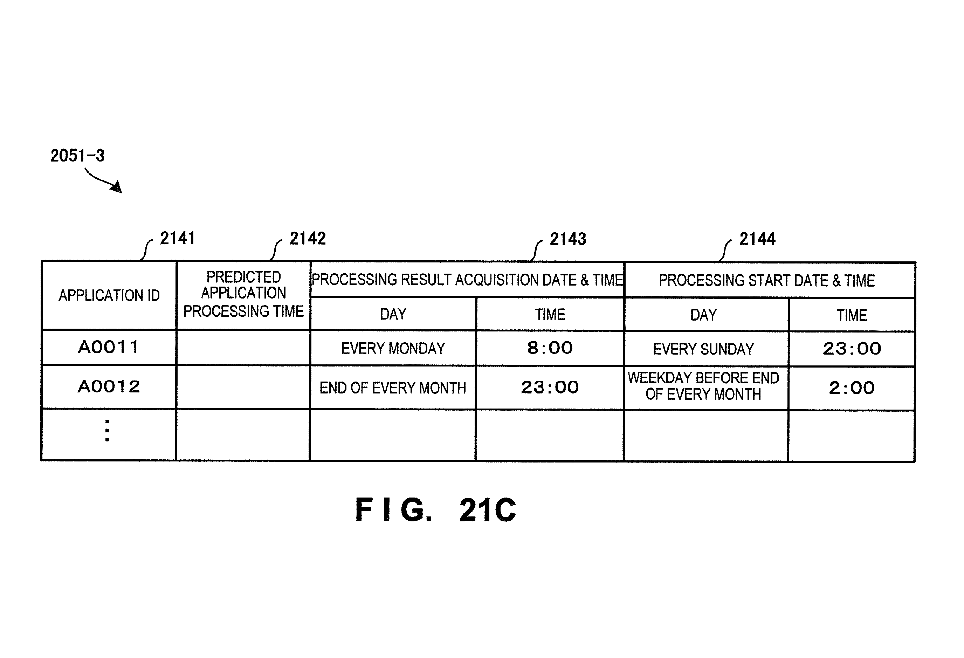

Fig. 21C is a view showing the arrangement of a third execution time setting table 2051-3 according to this embodiment. In this example, the application execution time setter 2050 starts executing an application at a time meeting a processing result acquisition cycle (for example, periodical acquisition in every Monday or at the end of every month) set by a client. Note that Fig. 21C shows data to be further added to the data in Fig. 9.

The third execution time setting table 2051-3 stores a predicted application processing time 2142, a processing result acquisition date and time 2143, and a processing start date and time 2144 in association with an application ID 2141. The processing start date and time 2144 is a time obtained by subtracting the predicted processing time 2142 from the acquisition time 2143. However, somewhat early time is set for the sake of safety. Note that the predicted processing time 2142 is stored in the application DB 2022 in correspondence with the application ID.

The third execution time setting table 2051-3 makes it possible to acquire the processing result of the application every time at the client's desired time.

### [Fourth Embodiment]

An information processing system according to the fourth embodiment of the present invention will be described next. The information processing system according to this embodiment is different from the second and third embodiments in that information processing executed by a cloud server during communication disconnection is implemented by a combination and execution procedure of a plurality of applications corresponding to a client. The combination and execution procedure of the plurality of applications corresponding to the client are generated in accordance with a plurality of screen manipulations from the client apparatus. The rest of the components and operations is the same as in the second embodiment or the third embodiment. Hence, the same reference numerals as in the second embodiment or the third embodiment denote the same components and operations, and a detailed description thereof will be omitted.

According to this embodiment, even when communication disconnection occurs after requesting the cloud server to execute information processing, a plurality of applications corresponding to the client can be executed during the communication disconnection, and the processing result can be acquired from any client apparatus at a desired timing. In addition, it is possible to eliminate the conventional client's constraint time to perform a screen manipulation between the client apparatus and the cloud server.

### «Operation of Information Processing System»

Fig. 22 is a view for explaining the operation of the information processing system according to this embodiment. Note that the same reference numerals as in Fig. 2 of the second embodiment denote the same constituent elements in Fig. 22, and a description thereof will be omitted. In Fig. 22, the client apparatus is represented by a communication terminal. However, the client apparatus may be a desktop PC or a notebook PC, or a digital TV, a digital camera, or the like.

The upper stage of Fig. 22 shows the operation of the information processing system when a data collection and search/editing instruction 2211 by a "client A 2212" to obtain "the commodity price fluctuation from 2000 and associated topics that affected the commodity price in the meantime" is sent from the display screen of a communication terminal 210 to the cloud server. In the data collection and search/editing instruction 2211, the client A 2212 is specified.

After the processing request is input in the left view of the upper stage of Fig. 22, the communication between the communication terminal 210 and the cloud server is disconnected as shown in the central view of the upper stage. The communication terminal 210 displays a storage destination 212 to store a processing result that the cloud server has obtained by executing processing corresponding to the instruction.

The right view of the upper stage of Fig. 22 shows a display screen 2221 displayed when another communication terminal 220 acquires the processing result of the cloud server from the storage destination. The display screen 2221 displays that the request is the request from a client A 2223 and that the commodity price requested by the client A is an "oil price 2224". The cloud server determines, as a learning result, that the commodity price requested by the client A is the "oil price 2224", sequentially executes an application group including processing corresponding to it and editing of the display screen, and stores the processing result in a storage destination server. The right view on the upper stage of Fig. 22 shows the display screen 2221 displayed when the other communication terminal 220 accesses the processing result stored in the storage destination server.

On the other hand, the lower stage of Fig. 22 shows the operation of the information processing system when a data collection and search/editing instruction 2231 by a "client B 2232" to obtain "the commodity price fluctuation from 2000 and associated topics that affected the commodity price in the meantime" is sent from the display screen of a communication terminal 230 to the cloud server. The processing request is the same as that on the upper stage of Fig. 22 except that the client changes from "A" to "B".

After the processing request is input in the left view of the lower stage of Fig. 22, the communication between the communication terminal 230 and the cloud server is disconnected as shown in the central view of the lower stage. The communication terminal 230 displays a storage destination 232 to store a processing result that the cloud server has obtained by executing processing corresponding to the instruction.

The right view of the lower stage of Fig. 22 shows display screens 2241 and 2261 displayed when two other different communication terminals 240 and 250 acquire the processing result of the cloud server from the storage destination. The communication terminal 240 here is a notebook PC and displays a processing result corresponding to the data collection and search/editing instruction 2231. On the other hand, the communication terminal 250 is a portable phone. The communication terminal 250 is connected to a display device 260 via a USB cable 252. The display screen 2261 of the display device 260 displays a largely enlarged processing result. The display screens 2241 and 2261 display that the request is the request from a client B 2243 or 2263 and that the commodity price requested by the client B is a "soybean price 2244 or 2264". The cloud server determines, as a learning result, that the commodity price requested by the client B is the "soybean price 2244 or 2264", sequentially executes an application group including processing corresponding to it and editing of the display screen, and stores the processing result in the storage destination server. The right view on the lower stage of Fig. 22 shows the display screens 2241 and 2261 displayed when the other communication terminals 240 and 250 access the processing result stored in the storage destination server.

### «Operation Procedure of Information Processing System»

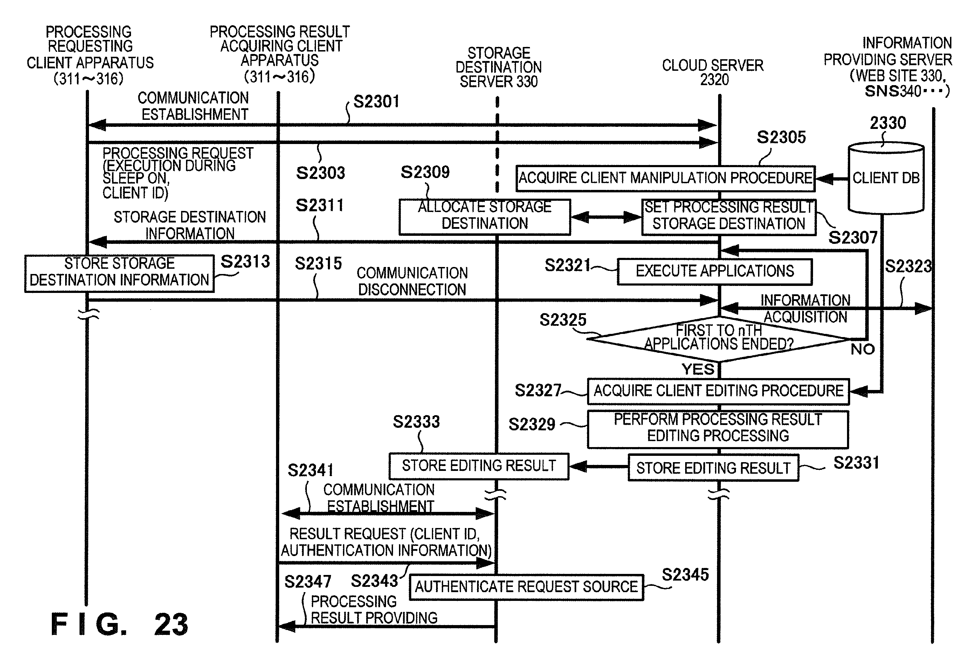

Fig. 23 is a sequence chart showing the operation procedure of the information processing system according to this embodiment. Note that in Fig. 23, several steps are omitted to simplify the description in the same sequence as in Fig. 4 of the second embodiment. See Fig. 4 for the omitted portions.

First, in step S2301, communication between a cloud server 2320 and client apparatuses 311 to 316 that request processing is established.

In step S2303, the client apparatuses 311 to 316 request the cloud server 2320 to do processing. This request includes a client ID that identifies the client who is manipulating in addition to an execution flag during sleep in the ON state. That is, the request instructs sleep execution by which the cloud server 1920 continues processing even when communication is disconnected, and also notifies the cloud server 2320 of the identification information of the client who is manipulating.

In step S2305, the cloud server 2320 acquires a learned client manipulation procedure and an application group according to the manipulation procedure by referring to a client DB 2330 that stores an application group that implements information processing corresponding to a client together with its processing procedure. In step S2307, the cloud server 2320 sends a client ID and authentication information to a storage destination server 330, requests it to allocate a processing result storage destination, and if allocated, sets the storage destination. In step S2309, the storage destination server 330 allocates the storage destination upon receiving the request from the cloud server 2320.

In step S2311, the cloud server 2320 notifies the client apparatuses 311 to 316 of the request source of the storage destination information. The storage destination information includes a URL. Upon receiving the storage destination information, the client apparatuses 311 to 316 of the request source store the storage destination information in step S2313. In step S2315, the client apparatuses 311 to 316 of the request source disconnect communication with the cloud server 2320. Note that the client apparatus 314 that is a notebook PC, the client apparatus 316 that is a desktop PC, and the like may be powered off after communication disconnection.

On the other hand, the cloud server 2320 sequentially executes the applications according to the acquired client manipulation procedure in step S2321. In step S2323, the cloud server 2320 acquires information from an information providing server as part of the processing. In step S2325, the cloud server 2320 determines whether execution of all applications associated with the first to nth processes according to the client manipulation procedure has ended. When execution of all the first to nth applications has ended, the cloud server 2320 advances to step S2327 and acquires a client editing procedure and an application group according to the editing procedure from the client DB 2330. In step S2329, the cloud server 2320 performs editing processing corresponding to the client for the processing result. The editing processing includes, for example, display sequence, selection of information in the display screen, layout on the screen, screen adjustment to adjust colors and the like, and attachment of an audio output.

When the editing processing ends, the cloud server 2320 transfers the processing result to the storage destination server 330 in step S2331. The processing result is data edited so as to enable display/audio output directly when acquired by a client apparatus. In step S2333, the processing result sent from the cloud server 2320 to the storage destination server 330 is stored at the storage destination allocated by the storage destination server 330.

After that, in step S2341, communication between the storage destination server 330 and the client apparatuses 311 to 316 that are different from the client apparatus that has requested and acquire the processing result is established. In this example, the access is done based on a URL. In step S2343, the client apparatuses 311 to 316 that acquire the processing result transmit a processing result acquisition request to the storage destination server 330 together with the client ID and authentication information. In step S2345, the storage destination server 330 authenticates the processing result request source. If authentication is impossible, the processing stops. If the client apparatus is authenticated, in step S2347, the storage destination server 330 provides the processing result to the client apparatuses 311 to 316 that acquire the processing result. Note that the processes of steps S2341 to S2347 can be performed as a series of processes based on simple instructions by the client. For example, the processes are preferably started only by clicking the icon of a person, as shown in Fig. 2, and subsequent progress is preferably done by clicking, for example, "back/next". In a presentation or the like that should end in a predetermined time, the processing result may be edited by setting a time such that the screen automatically changes to the next one.

As described above, in this embodiment, by sending a processing request to the cloud server together with the identifier of the client that has requested, a processing result obtained by sequentially executing a plurality of applications obtained from leaning of the client's manipulation history can be acquired from any client apparatus even when communication disconnection has occurred.

Note that in the description of Fig. 23, execution of an application corresponding to a client manipulation and execution of an application corresponding to client editing have divisionally been explained. However, these applications are sometimes executed in combination. In this case, the processing order of both applications concerning the manipulation and editing is set.

### «Functional Arrangement of Cloud Server»

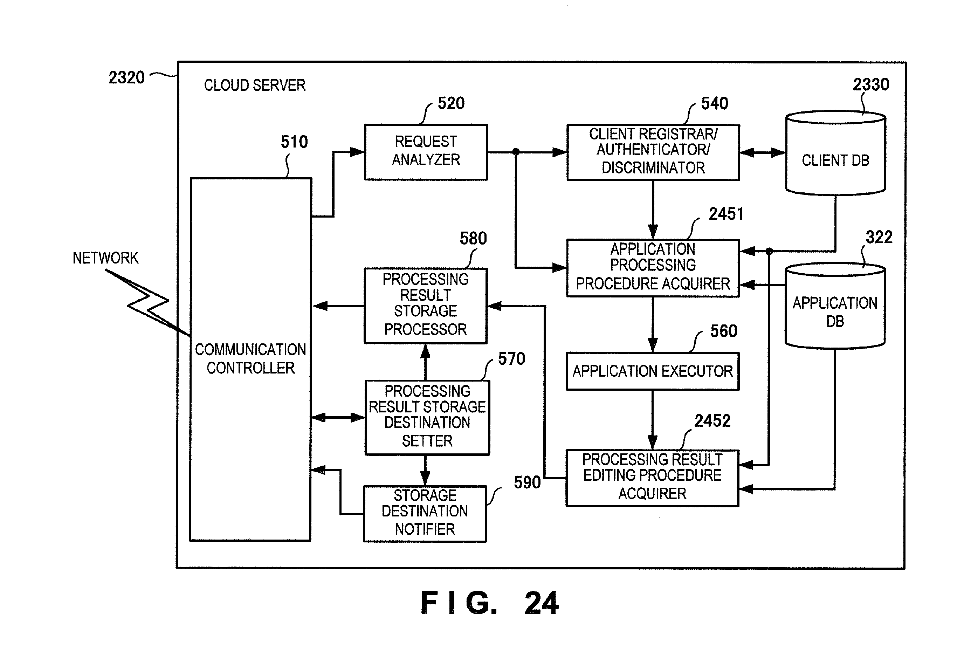

Fig. 24 is a block diagram showing the functional arrangement of the cloud server 2320 according to this embodiment. Note that the same reference numerals as in Fig. 5 of the second embodiment denote the same functional components in Fig. 24, and a description thereof will be omitted.

An application processing procedure acquirer 2451 refers to the client DB 2330 to which the information of an application group corresponding to a client manipulation is newly added, and acquires an application group of information processing learned in correspondence with the client. A processing result editing procedure acquirer 2452 refers to the client DB 2330 to which the information of an application group corresponding to client editing is newly added, and acquires an application group of editing processing learned in correspondence with the client. The client DB 2330 basically holds data shown in Fig. 8, and additionally holds information necessary for the embodiment.

### (Client DB)

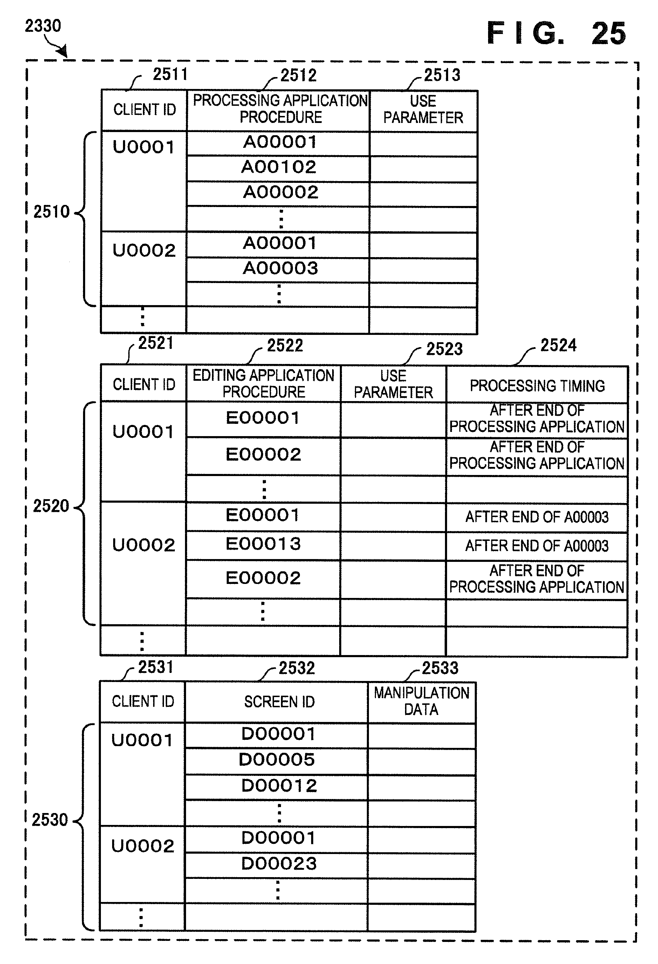

Fig. 25 is a view showing the arrangement of the client DB 2330 according to this embodiment. In this example, the history of client's screen manipulations is accumulated, information manipulations and processing result editing are separated from the screen manipulations, an application group corresponding to them is executed by the cloud server in accordance with the processing procedure without intervention of the client. Note that Fig. 25 shows data to be further added to the data in Fig. 8.

The client DB 2330 includes a processing application storage 2510, an editing application storage 2520, and a screen manipulation storage 2530 acquired from an application DB 322 in addition to the data shown in Fig. 8.

The processing application storage 2510 sequentially stores an application group associated with an information manipulation in correspondence with a client. In association with each client ID 2511, the processing application storage 2510 stores a processing application procedure 2512 and a use parameter 2513 that is unique to the client and is used to execute the processing application.

The editing application storage 2520 sequentially stores an application group associated with editing processing in correspondence with a client. In association with each client ID 2521, the editing application storage 2520 stores an editing application procedure 2522 and a use parameter 2523 that is unique to the client and is used to execute the editing application. The editing application storage 2520 also stores a processing timing 2524 that associates the timing of processing of the editing application with a processing application.

The screen manipulation storage 2530 accumulates client's screen manipulations to acquire an application corresponding to a client's screen manipulation from the application DB 322. In association with each client ID 2531, the screen manipulation storage 2530 stores a screen ID 2532 and manipulation data 2533 that is information representing what kind of manipulation was done for the screen by the client. Based on the screen ID 2532 and the manipulation data 2533, an application that implements an information manipulation and editing processing desired by the client is searched from the application DB 322.

### [Fifth Embodiment]

An information processing system according to the fifth embodiment of the present invention will be described next. The information processing system according to this embodiment is different from the fourth embodiment in that a combination and execution procedure of a plurality of applications according to a plurality of screen manipulations from a client apparatus corresponds to not a client but a customer that is the account of the client. In addition, the combination and execution procedure of the plurality of applications corresponding to the client are generated in accordance with a plurality of screen manipulations from the client apparatus. The rest of the components and operations is the same as in the fourth embodiment. Hence, the same reference numerals as in the fourth embodiment denote the same components and operations, and a detailed description thereof will be omitted.

According to this embodiment, even when communication disconnection occurs after requesting the cloud server to execute information processing, a plurality of applications corresponding to the customer can be executed during the communication disconnection, and the processing result can be acquired from any client apparatus at a desired timing. In addition, it is possible to eliminate the conventional client's constraint time to perform a screen manipulation between the client apparatus and the cloud server.

Note that in this embodiment, a customer DB is provided separately from a client DB.

However, a customer DB may be provided in association with each client of the client DB to form one client DB.

### <<Operation of Information Processing System>>

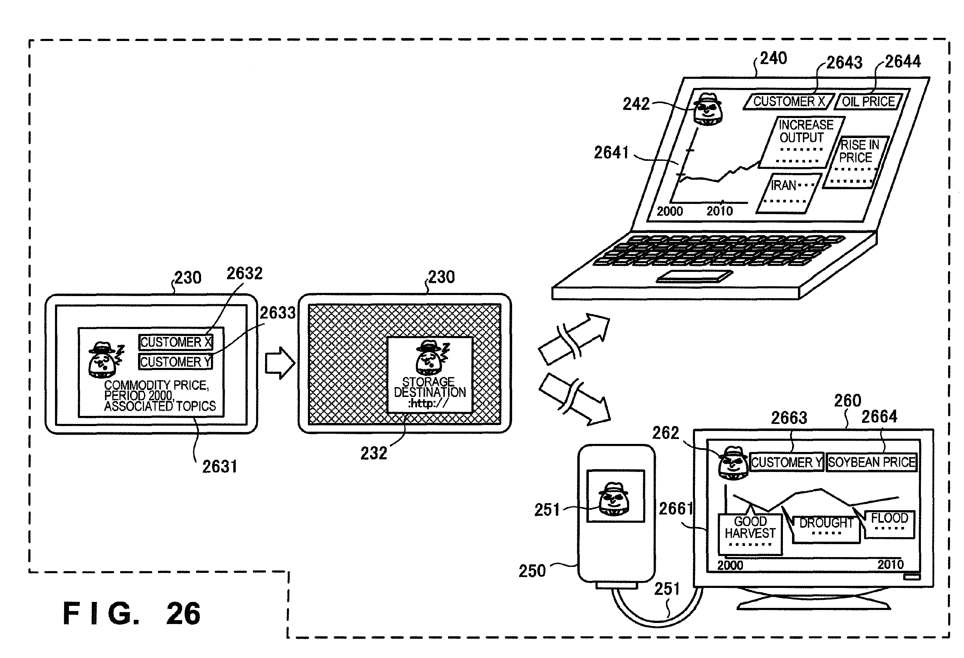

Fig. 26 is a view for explaining the operation of the information processing system according to this embodiment. Note that the same reference numerals as in Fig. 2 of the second embodiment or Fig. 22 of the fourth embodiment denote the same constituent elements in Fig. 26, and a description thereof will be omitted. In Fig. 22, the client apparatus is represented by a communication terminal. However, the client apparatus may be a desktop PC or a notebook PC, or a digital TV, a digital camera, or the like.

Fig. 26 shows the operation of the information processing system when a data collection and search/editing instruction 2631 by a "customer X 2632" and a "customer Y 2633" to obtain "the commodity price fluctuation from 2000 and associated topics that affected the commodity price in the meantime" is sent from the display screen of a communication terminal 230 to the cloud server.

After the processing request is input in the left view of Fig. 26, the communication between the communication terminal 230 and the cloud server is disconnected as shown in the central view. The communication terminal 230 displays a storage destination 232 to store a processing result that the cloud server has obtained by executing processing corresponding to the instruction.

The right view of Fig. 26 shows display screens 2641 and 2661 displayed when two other different communication terminals 240 and 250 acquire the processing result of the cloud server from the storage destination. The communication terminal 240 here is a notebook PC and displays a processing result corresponding to the data collection and search/editing instruction 2631. On the other hand, the communication terminal 250 is a portable phone. The communication terminal 250 is connected to a display device 260 via a USB cable 252. The display screen 2661 of the display device 260 displays a largely enlarged processing result.

The display screen 2641 displays that the request is the request for presentation to a customer X 2643 by the client and that the commodity price in which the customer X is interested is an "oil price 2644". The cloud server learns, as a learning result, that the commodity price in which the customer X is interested is the "oil price 2644", sequentially executes an application group including processing corresponding to it and editing of the display screen, and stores the processing result in the storage destination server. The upper stage of the right view shows the display screen 2641 displayed when the other communication terminal 240 accesses the processing result stored in the storage destination server in which the customer X is interested.

The display screen 2661 displays that the request is the request for presentation to a customer Y 2663 by the client and that the commodity price in which the customer Y is interested is a "soybean price 2664".

The cloud server learns, as a learning result, that the commodity price in which the customer Y is interested is the "oil price 2644", sequentially executes an application group including processing corresponding to it and editing of the display screen, and stores the processing result in the storage destination server. The lower stage of the right view shows the display screen 2661 displayed when the other communication terminal 250 accesses the processing result stored in the storage destination server in which the customer Y is interested.

### «Operation Procedure of Information Processing System»

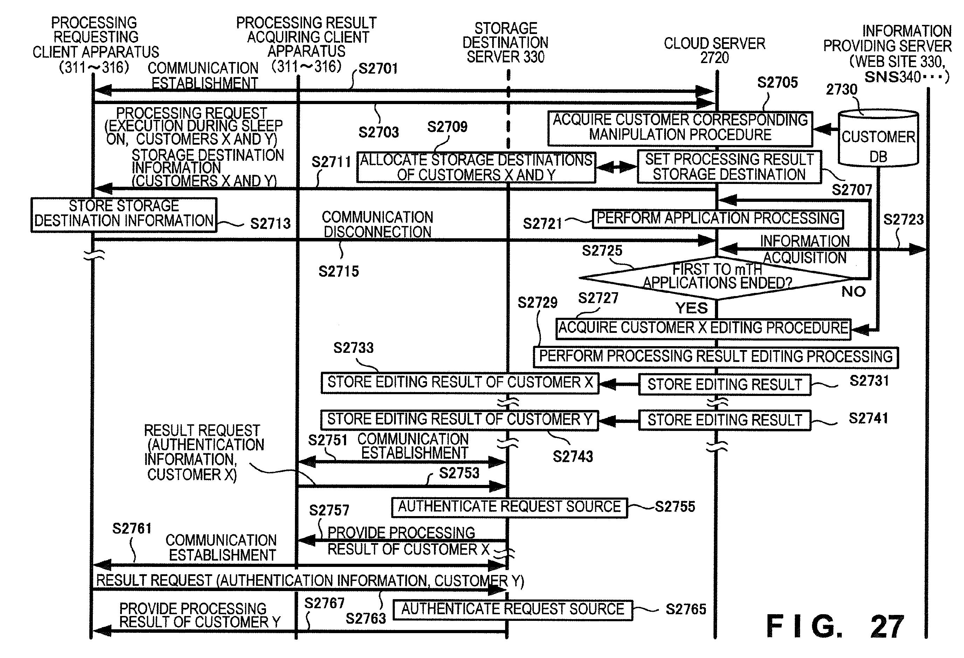

Fig. 27 is a sequence chart showing the operation procedure of the information processing system according to this embodiment. Note that Fig. 27 shows a change by changing information processing selection from "client" to "customer", as compared to Fig. 23 of the fourth embodiment. However, in Fig. 27, one client can perform information processing for a plurality of customers. Referring to Fig. 27, information processing is performed for two customers X and Y. In addition, in Fig. 27, several steps are omitted to simplify the description in the same sequence as in Fig. 4 of the second embodiment. See Fig. 4 for the omitted portions.

First, in step S2701, communication between a cloud server 2720 and client apparatuses 311 to 316 that request processing is established. In step S2703, the client apparatuses 311 to 316 request the cloud server 2720 to do processing. This request includes customer IDs that identify the customers X and Y as the partners to whom the client who is manipulating provides information in addition to an execution flag during sleep in the ON state. That is, the request instructs sleep execution by which the cloud server 1920 continues processing even when communication is disconnected, and also notifies the cloud server 2720 of the identification information of each customer to whom the client provides information.

In step S2705, the cloud server 2720 acquires a customer corresponding manipulation procedure by the learned client and an application group according to the manipulation procedure by referring to a customer DB 2730 that stores an application group that implements information processing corresponding to a customer together with its processing procedure. In step S2707, the cloud server 2720 sends a client ID, a customer ID, and authentication information to a storage destination server 330, requests it to allocate a processing result storage destination, and if allocated, sets the storage destination. In step S2709, the storage destination server 330 allocates the storage destination upon receiving the request from the cloud server 2720.

In step S2711, the cloud server 2720 notifies the client apparatuses 311 to 316 of the request source of the storage destination information corresponding to each customer. The storage destination information includes a URL. In this example, two pieces of storage destination information of the customers X and Y are notified. Upon receiving the storage destination information, the client apparatuses 311 to 316 of the request source store the two pieces of storage destination information in step S2713. In step S2715, the client apparatuses 311 to 316 of the request source disconnect communication with the cloud server 2720. Note that the client apparatus 314 that is a notebook PC, the client apparatus 316 that is a desktop PC, and the like may be powered off after communication disconnection.

On the other hand, the cloud server 2720 sequentially executes the applications according to the acquired customer corresponding manipulation procedure of the customer X in step S2721. In step S2723, the cloud server 2720 acquires information from an information providing server as part of the processing. In step S2725, the cloud server 2720 determines whether execution of all applications associated with the first to mXth processes according to the customer corresponding manipulation procedure has ended. When execution of all the first to mXth applications has ended, the cloud server 2720 advances to step S2727 and acquires a customer X editing procedure and an application group according to the editing procedure from the customer DB 2730. In step S2729, the cloud server 2720 performs editing processing corresponding to the customer X for the processing result. The editing processing includes, for example, display sequence, selection of information in the display screen, layout on the screen, screen adjustment to adjust colors and the like, and attachment of an audio output.

When the editing processing ends, the cloud server 2720 transfers the processing result to the storage destination server 330 in step S2731. The processing result is data edited so as to enable display/audio output directly when acquired by a client apparatus. In step S2733, the processing result corresponding to the customer X sent from the cloud server 2720 to the storage destination server 330 is stored at the storage destination corresponding to the customer X allocated by the storage destination server 330.

Next, first to mYth applications corresponding to the customer Y are executed, and editing processing corresponding to the customer Y is performed for the processing result in the same way as described above. Note that the processing procedure corresponding to the customer Y is the same as the processing procedure of the customer X except that the applications are different, and a detailed description thereof will be omitted. When the editing processing ends, the cloud server 2720 transfers the processing result to the storage destination server 330 in step S2741. The processing result is data edited so as to enable display/audio output directly when acquired by a client apparatus. In step S2743, the processing result corresponding to the customer Y sent from the cloud server 2720 to the storage destination server 330 is stored at the storage destination corresponding to the customer Y allocated by the storage destination server 330.

After that, in step S2751, communication between the storage destination server 330 and the client apparatuses 311 to 316 that are different from the client apparatus that has requested and acquire the processing result is established. In this example, the access is done based on a URL. In step S2753, the client apparatuses 311 to 316 that acquire the processing result transmit a processing result acquisition request to the storage destination server 330 together with the client ID and the ID and authentication information of the customer X. In step S2755, the storage destination server 330 authenticates the processing result request source. If authentication is impossible, the processing stops. If the client apparatus is authenticated, in step S2757, the storage destination server 330 provides the processing result corresponding to the customer X to the client apparatuses 311 to 316 that acquire the processing result. Note that the processes of steps S2751 to S2757 can be performed as a series of processes based on simple instructions by the client. For example, the processes are preferably started only by clicking the icon of a person, as shown in Fig. 2, and subsequent progress is preferably done by clicking, for example, "back/next". In a presentation or the like that should end in a predetermined time, the processing result may be edited by setting a time such that the screen automatically changes to the next one.

In addition, in step S2761, communication between the storage destination server 330 and the client apparatuses 311 to 316 that have requested information processing is established. In this example, the access is done based on a URL. In step S2763, the client apparatuses 311 to 316 that have requested information processing transmit a processing result acquisition request to the storage destination server 330 together with the client ID and the ID and authentication information of the customer Y. In step S2765, the storage destination server 330 authenticates the processing result request source. If authentication is impossible, the processing stops. If the client apparatus is authenticated, in step S2767, the storage destination server 330 provides the processing result corresponding to the customer Y to the client apparatuses 311 to 316 that acquire the processing result. Note that the processes of steps S2761 to S2767 can simplify the manipulation like the processes of steps S2751 to S2757.

As described above, in this embodiment, by sending a processing request to the cloud server together with the identifier of the client that has requested and the identifiers of a plurality of customers, a processing result obtained by sequentially executing a plurality of applications corresponding to the customers, which are obtained from leaning of the client's manipulation history, can be acquired from any client apparatus even when communication disconnection has occurred.

Note that in the description of Fig. 27, execution of an application corresponding to a client manipulation and execution of an application corresponding to client editing have divisionally been explained. However, these applications are sometimes executed in combination. In this case, the processing order of both applications concerning the manipulation and editing is set.

### «Functional Arrangement of Cloud Server»

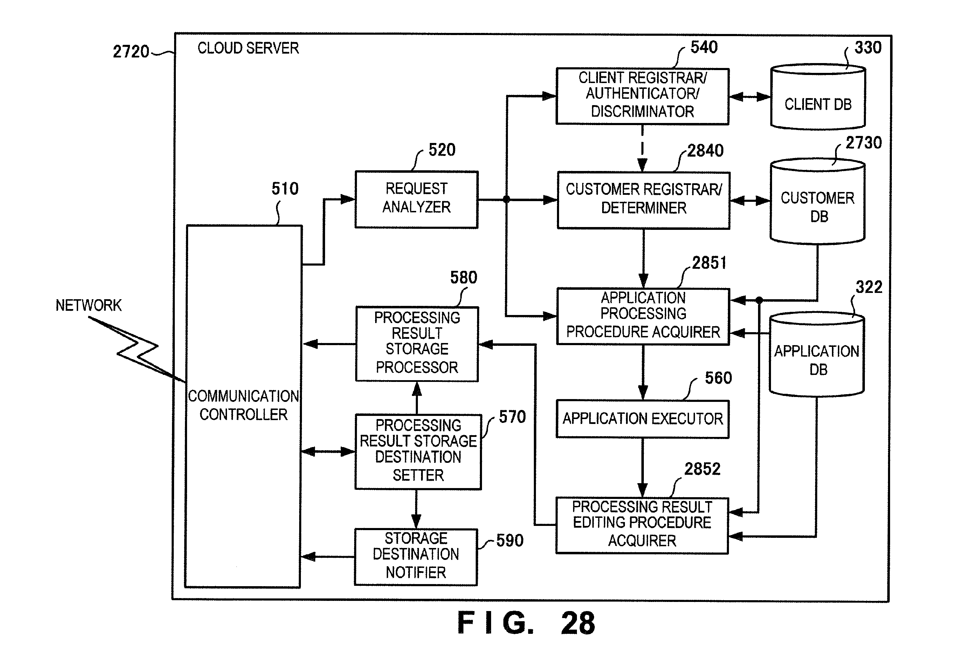

Fig. 28 is a block diagram showing the functional arrangement of the cloud server 2720 according to this embodiment. Note that the same reference numerals as in Fig. 5 of the second embodiment denote the same functional components in Fig. 28, and a description thereof will be omitted.

A customer registrar/determiner 2840 registers customer information from a request analyzer 520 in the customer DB 2730, and also determines customer information included in the request message of information processing from the client apparatus by referring to the customer DB 2730. An application processing procedure acquirer 2851 acquires an information processing application group learned in correspondence with a client's customer corresponding screen manipulation by referring to the customer DB 2730 that stores the information of the application group generated in correspondence with a client' customer corresponding manipulation. A processing result editing procedure acquirer 2852 acquires an editing processing application group learned in correspondence with a client's customer corresponding screen manipulation by referring to the customer DB 2730 that stores the information of the application group generated in correspondence with a client' customer corresponding manipulation.

### (Customer DB)

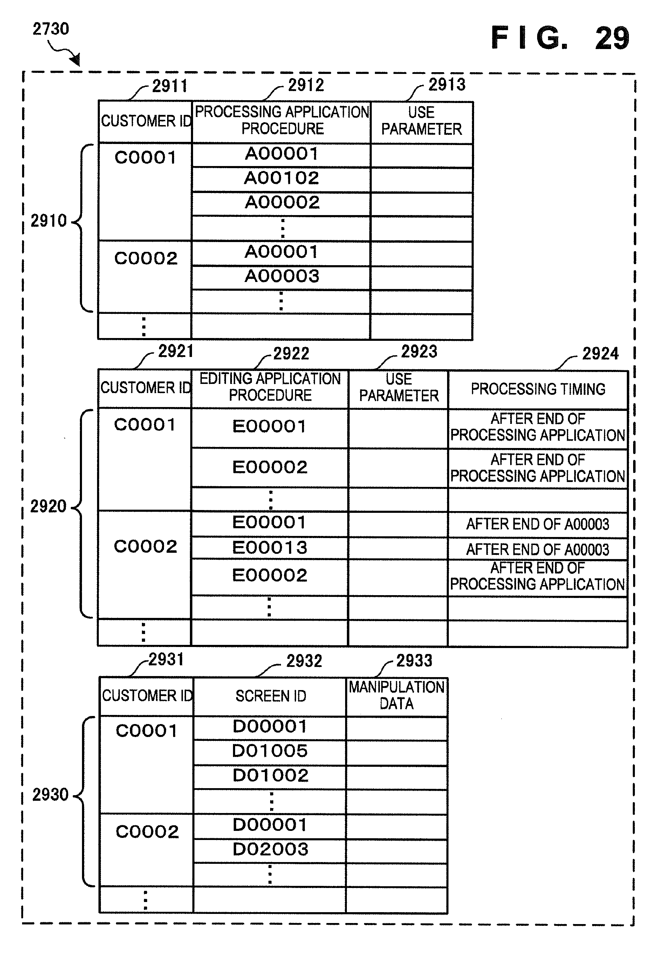

Fig. 29 is a view showing the arrangement of the customer DB 2730 according to this embodiment. Note that the arrangement shown in Fig. 29 is the same as the additional portion of the client DB 2330 shown in Fig. 23 except that the client ID is replaced with a customer ID.

The customer DB 2730 includes a processing application storage 2910, an editing application storage 2920, and a screen manipulation storage 2930 acquired from an application DB 322.

The processing application storage 2910 sequentially stores an application group associated with an information manipulation in correspondence with a customer. In association with each customer ID 2911, the processing application storage 2910 stores a processing application procedure 2912 and a use parameter 2913 that is unique to the customer and is used to execute the processing application.

The editing application storage 2920 sequentially stores an application group associated with editing processing in correspondence with a customer. In association with each customer ID 2921, the editing application storage 2920 stores an editing application procedure 2922 and a use parameter 2923 that is unique to the customer and is used to execute the editing application. The editing application storage 2920 also stores a processing timing 2924 that associates the timing of processing of the editing application with a processing application.

The screen manipulation storage 2930 accumulates client's customer corresponding screen manipulations to acquire an application corresponding to a client's customer corresponding screen manipulation from the application DB 322. The screen manipulation storage 2930 stores a screen ID 2932 and manipulation data 2933 that is information representing what kind of manipulation was done for the screen by the client in association with each customer ID 2931. Based on the screen ID 2932 and the manipulation data 2933, an application that implements a desired information manipulation and editing processing that the client wants to provide to the customer is searched from the application DB 322.

### [Sixth Embodiment]

An information processing system according to the sixth embodiment of the present invention will be described next. The information processing system according to this embodiment is different from the fourth embodiment in that when a result of information processing that a client apparatus has executed in a cloud server is unprocessable by a client apparatus that acquires the processing result, direct exchange between the cloud server and an input/output device is performed without intervention of the client apparatus. The rest of the components and operations is the same as in one of the first to fifth embodiments. Hence, the same reference numerals as in the embodiment denote the same components and operations, and a detailed description thereof will be omitted.

According to this embodiment, even when communication disconnection occurs after requesting the cloud server to execute information processing, a plurality of applications corresponding to a customer can be executed during the communication disconnection, and the processing result can be acquired at a desired timing via the client apparatus incapable of processing the processing result.

### «Operation of Information Processing System»

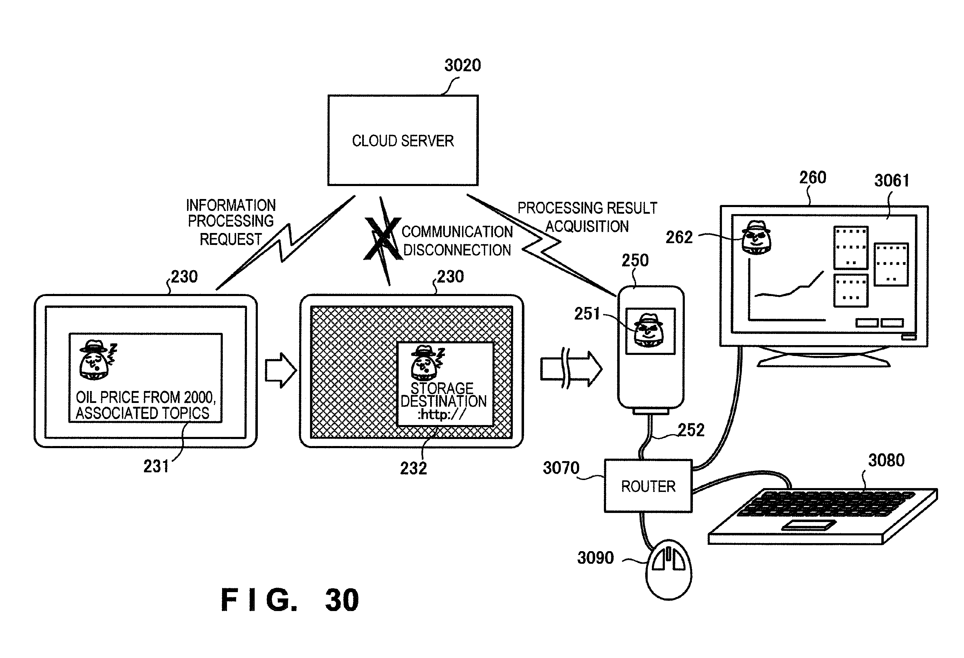

Fig. 30 is a view for explaining the operation of the information processing system according to this embodiment. Note that the same reference numerals as in Fig. 2 of the second embodiment denote the same constituent elements in Fig. 30, and a description thereof will be omitted.

Fig. 30 shows the operation of the information processing system when a data collection and search/editing instruction 231 to obtain "the oil price fluctuation from 2000 and associated topics that affected the oil price in the meantime" is sent from the display screen of a communication terminal 230 to a cloud server 3020.

After the processing request is input in the left view of Fig. 30, the communication between the communication terminal 230 and the cloud server 3020 is disconnected as shown in the central view. The communication terminal 230 displays a storage destination 232 to store a processing result that the cloud server 3020 has obtained by executing processing corresponding to the instruction.

In the right view of Fig. 30, a communication terminal 250 acquires the processing result of the cloud server 3020 from the storage destination and displays it on a display screen 3061, and editing processing is also performed using a keyboard 3080 or a pointing device 3090. The communication terminal 250 is a portable phone. The communication terminal 250 is connected to a router 3070 via a USB cable 252. The router 3070 is connected to a display device 260, the keyboard 3080, and the pointing device 3090. The display screen 3061 of the display device 260 displays a largely enlarged processing result.

In this embodiment, an arrangement in a case where the result of processing of the cloud server 3020 cannot be processed by the communication terminal 250 because of mismatch of the command system or data format, or the communication speed or device driver, or the capability of the connected input/output device cannot sufficiently be exploited will be described.

In this case, the cloud server 3020 directly exchanges data with the display device 260, the keyboard 3080, or the pointing device 3090 using the communication terminal 250 as a relay station. This makes it possible to output or edit the processing result in accordance with the performance of the input/output terminal. This is particularly effective when the display device 260 has high performance.

Note that the device connected to the communication terminal 250 via the USB cable 252 is not limited to the input/output device, and it is also possible to cope with, for example, a desktop PC having no wireless communication function.

### «Operation Procedure of Information Processing System»

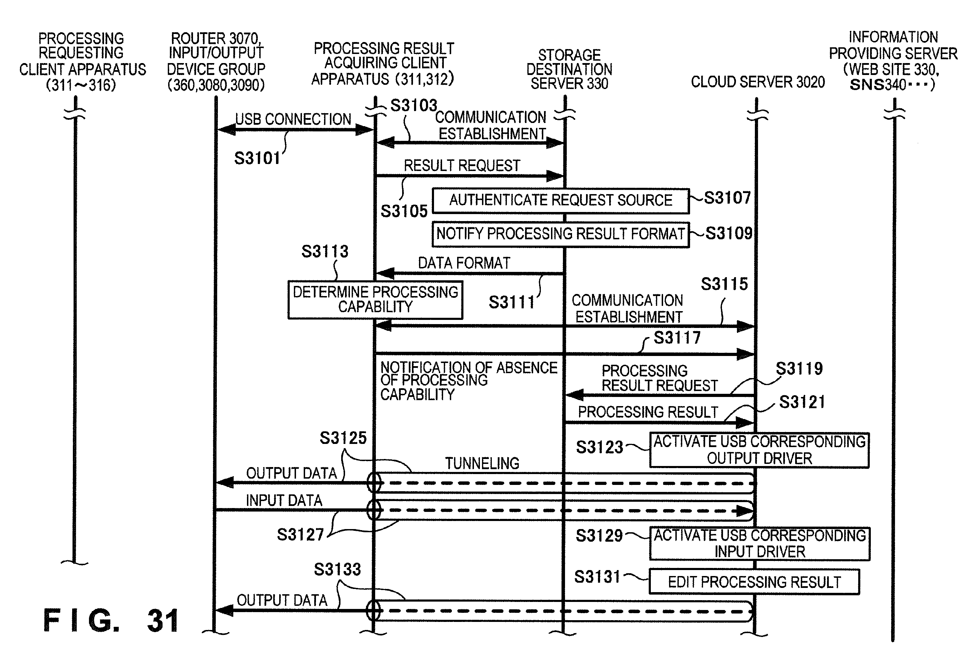

Fig. 31 is a sequence chart showing the operation procedure of the information processing system according to this embodiment. Note that Fig. 31 does not illustrate a processing request from client apparatuses 311 to 316 to the cloud server 3020, storage destination allocation in a storage destination server 330, and storage destination notification to the client apparatuses 311 to 316 that have requested the processing because they are the same as in the above-described embodiments. Hence, Fig. 31 shows the operation procedure of processing result providing control according to this embodiment after the processing result from the cloud server 3020 is stored in a processing result DB 331 of the storage destination server 330.

First, in step S3101, the client apparatuses 311 to 316 that acquire the processing result are connected to an input/output device group by the USB cable via the router 3070. In step S3103, communication with the storage destination server 330 is established. In step S3105, the client apparatus sends a processing result acquisition request together with the client ID and authentication information. In step S3107, the storage destination server 330 authenticates the request source. If authentication results in an error, processing result acquisition stops. If the client apparatus is authenticated, in step S3109, the storage destination server 330 notifies the client apparatus of the request source of the data format of the processing result. Note that the contents to be notified are not limited to the format. If there is mismatch of the command system, or the communication speed or device driver, information troublesome for normal processing is notified.

The client apparatus of the request source receives the transmitted data format in step S3111, and determines in step S3113 whether the local apparatus has a sufficient processing capability. If the processing capability is sufficient, the client apparatus of the request source directly acquires the processing result and outputs it to the output device (not shown).

If the processing capability is not sufficient, the client apparatus of the request source establishes communication with the cloud server 3020 in step S3115. The client apparatus of the request source notifies the cloud server 3020 that the client apparatus cannot process the data of the processing result stored in the storage destination server 330.

When notified of the absence of the processing capability, the cloud server 3020 requests the stored processing result of the storage destination server 330 in step S3119. In step S3121, the storage destination server 330 transfers the processing result to the cloud server 3020. Note that if the processing result is still held by the cloud server, it acquires the processing result without requesting the storage destination server 330.

In step S3123, the cloud server 3020 activates a USB corresponding output driver. Note that the ID, model, performance information, and the like of the input/output device connected via the router 3070 can be notified in step S3117 or acquired by the cloud server 3020 itself after driver activation. In step S3125, the cloud server 3020 generates a command/data corresponding to the output device, and generates packet data tunneled by an IP (Internet Protocol) layer according to the USB protocol. The packet data is directly transmitted to the display device 260 serving as an output device through the client apparatus of the request source that only extracts an IP address.

To edit the data displayed on the display device 260, in step S3127, USB packet data is generated from the command/data corresponding to the output device and directly transmitted to the cloud server 3020 through the client apparatus of the request source that only attaches an IP address. In step S3129, the cloud server 3020 activates a USB corresponding input driver and acquires a data/command from the input device. In step S3131, the cloud server 3020 edits the processing result based on an input from the input device. The result is output to the output device in step S3133, as in step S3125.

### (Communication Protocol Stack)

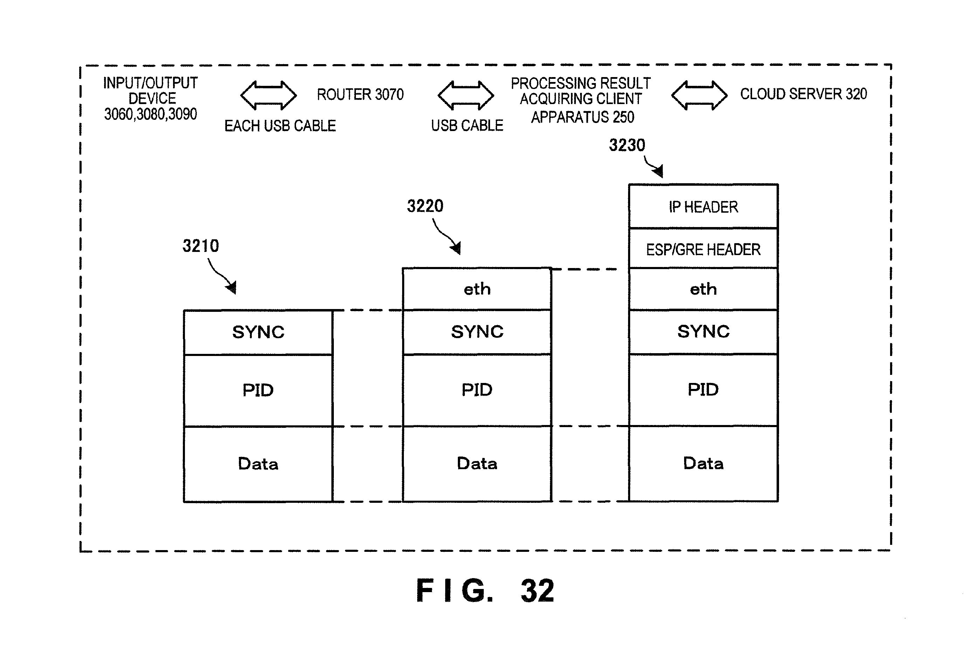

Fig. 32 is a view showing communication protocol stacks according to this embodiment.

Referring to Fig. 32, a USB protocol stack 3210 is the basic arrangement of a USB packet to be exchanged on the USB cable between the router and the input/output device. A protocol stack 3220 with Ethernet® added to the USB packet is transmitted on a LAN (Local Area Network) between the router 3070 and the client apparatus of the request source. A protocol stack 3230 further including an IP layer is transmitted on an IP network between the cloud server 3020 and the client apparatus of the request source.

With this protocol stack arrangement, a processing result can be output or edited independently of the processing performance of the client apparatus of the request source.

### [Seventh Embodiment]

An information processing system according to the seventh embodiment of the present invention will be described next. In the second to sixth embodiments, when continuing processing during communication disconnection between the cloud server and the client apparatus, if an application that needs access from the client apparatus or client is executed midway, the processing is interrupted. The information processing system according to this embodiment is different from the second to sixth embodiments in that a measure is taken to avoid conditions for interrupting processing execution of the cloud server during communication disconnection. For example, the conditions for interrupting processing execution of the cloud server during communication disconnection are as follows. Processing is interrupted when timeout of access from the client apparatus occurs. Processing is interrupted when an instruction from the client is essential to continue the processing. Processing is interrupted when data input from the client is essential to continue the processing. Note that the conditions for interrupting processing execution of the cloud server during communication disconnection are not limited to those. In this embodiment, the conditions for interrupting processing during communication disconnection are avoided in advance by a processing request, or a configuration for preventing an interrupt of processing during communication disconnection is used. The rest of the components and operations is the same as in one of the first to sixth embodiments. Hence, the same reference numerals as in the embodiment denote the same components and operations, and a detailed description thereof will be omitted.

According to this embodiment, the conditions for a processing interrupt that may occur during communication disconnection are eliminated, thereby executing an application during communication disconnection even when the communication disconnection occurs after requesting the cloud server. It is therefore possible to acquire the processing result at a desired timing via the client apparatus.

### «Operation Procedure of Information Processing System»

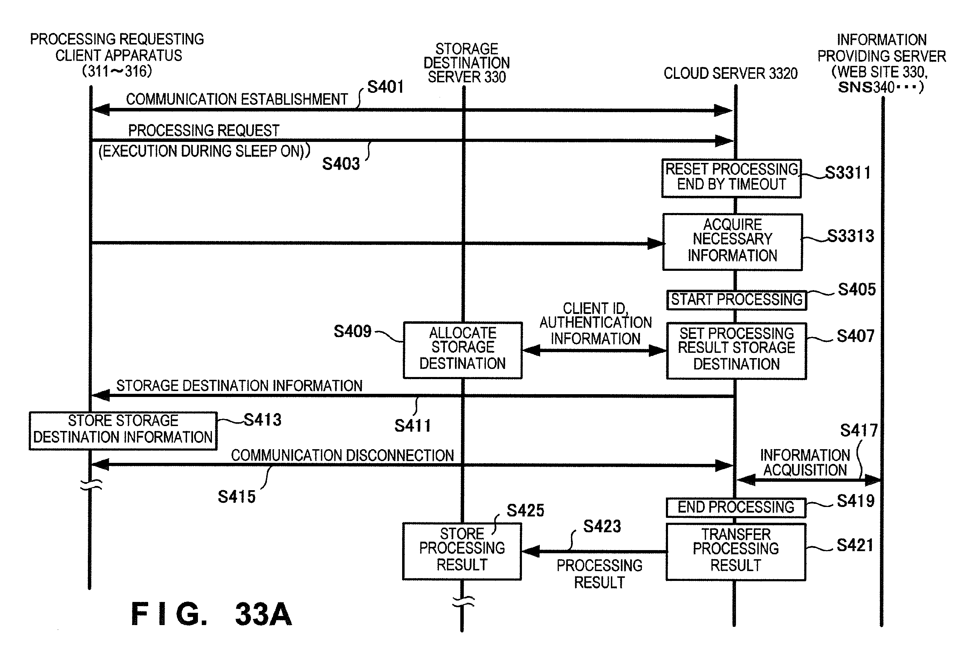

The operation procedure of the information processing system according to this embodiment and data essential for the operation will be described below with reference to Figs. 33A to 33D.

Fig. 33A is a sequence chart showing an example of the operation procedure of the information processing system according to this embodiment. Note that the same step numbers as in Fig. 4 of the second embodiment denote the same steps in Fig. 33A, and a description thereof will be omitted.

In step S403, a client apparatus that requests processing sends a processing request and instructs a cloud server 3320 to execute processing even during communication disconnection. Upon receiving the instruction, the cloud server 3320 resets the processing end condition by timeout in the absence of access from the client apparatus for a predetermined time in step S3311. This prevents an interrupt of processing even when access from the client apparatus is absent for a long time. In step S3313, the cloud server 3320 determines instructions from the client or data providing from the client necessary to continue the requested processing even during communication disconnection, and causes the client to provide them via the client apparatus in advance. The necessary information is acquired and held, and used in a necessary stage. Steps S3311 and S3313 are executed as prior measures against communication disconnection. Steps S3311 and S3313 are representative examples of prior measures and are not limited to those. The subsequent processing procedure is the same as in Fig. 4 of the second embodiment, and a description thereof will be omitted.

### (Processing Interrupt Avoiding Measure Table)

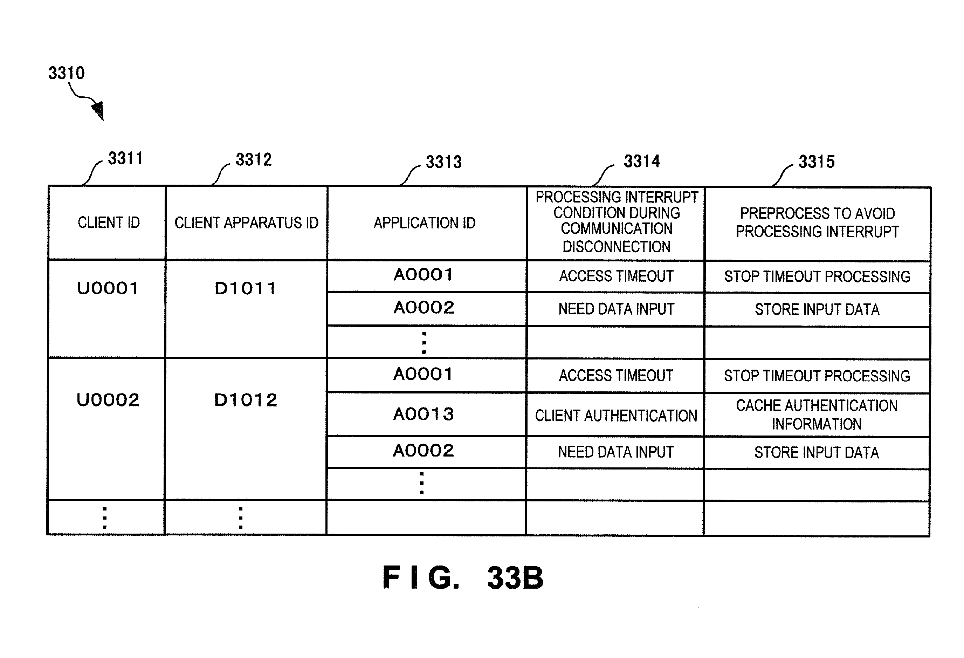

Fig. 33B is a view showing the arrangement of a processing interrupt avoiding measure table 3310 according to this embodiment. The processing interrupt avoiding measure table 3310 stores an application ID 3313 under processing in association with a client ID 3311 and a client apparatus ID 3312. A processing interrupt condition 3314 that occurs during communication disconnection due to the communication disconnection is stored in correspondence with each application ID 3313 under processing. A preprocess 3315 needed to avoid each processing interrupt condition 3314 from being met is stored. Upon recognizing that the client apparatus requests application execution processing, and communication disconnection occurs halfway through the processing, the cloud server 3320 performs preprocesses to avoid a processing interrupt based on the processing interrupt avoiding measure table 3310. The preprocesses include both processes to be automatically locally performed by the cloud server 3320 and processes to be requested of the client and performed from the client apparatus.

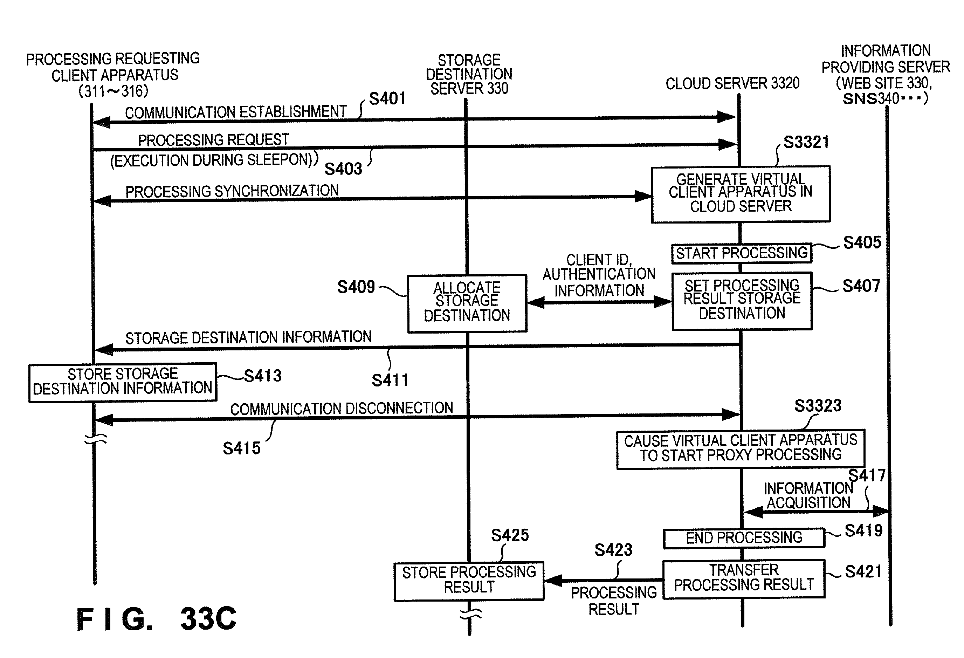

Fig. 33C is a sequence chart showing another example of the operation procedure of the information processing system according to this embodiment. Note that the same step numbers as in Fig. 4 of the second embodiment denote the same steps in Fig. 33C, and a description thereof will be omitted.

In step S403, a client apparatus that requests processing sends a processing request and instructs the cloud server 3320 to execute processing even during communication disconnection. Upon receiving the instruction, the cloud server 3320 generates a virtual client apparatus having a function of acting for the client apparatus in the cloud server 3320 in step S3321. The virtual client apparatus can be a virtual PC having all functions of the client apparatus or a virtual PC including functions necessary to avoid an interrupt of application processing even during communication disconnection. The virtual client apparatus operates so as to share necessary data in synchronism with the client apparatus. The virtual client apparatus may operate when sharing necessary data in synchronism with the client apparatus, and may be inactive in other times.

When the client apparatus that has requested the processing disconnects the communication with the cloud server 3320 in step S415, the cloud server 3320 starts using the virtual client apparatus generated in step S3321 as proxy for the client apparatus in step S3323. Note that in Fig. 33C, since the client apparatus that has requested and the virtual client apparatus are always in synchronism, the processing can be continued even when the communication is disconnected one-sidedly by the client apparatus. For example, in a configuration that makes the virtual client apparatus sleep until communication disconnection, necessary information is copied from the client apparatus to the virtual client apparatus when the client apparatus notifies communication disconnection.

Note that in Fig. 33C, the processing request from the client apparatus includes a processing continuation instruction during communication disconnection, as described. However, in the processing according to this embodiment, upon receiving the processing request from the client apparatus, a virtual client apparatus is automatically generated if the client is a registered client. This makes it possible to continue the application processing during communication disconnection even without the processing continuation instruction from the client apparatus.

### (Virtual Client Apparatus Table)

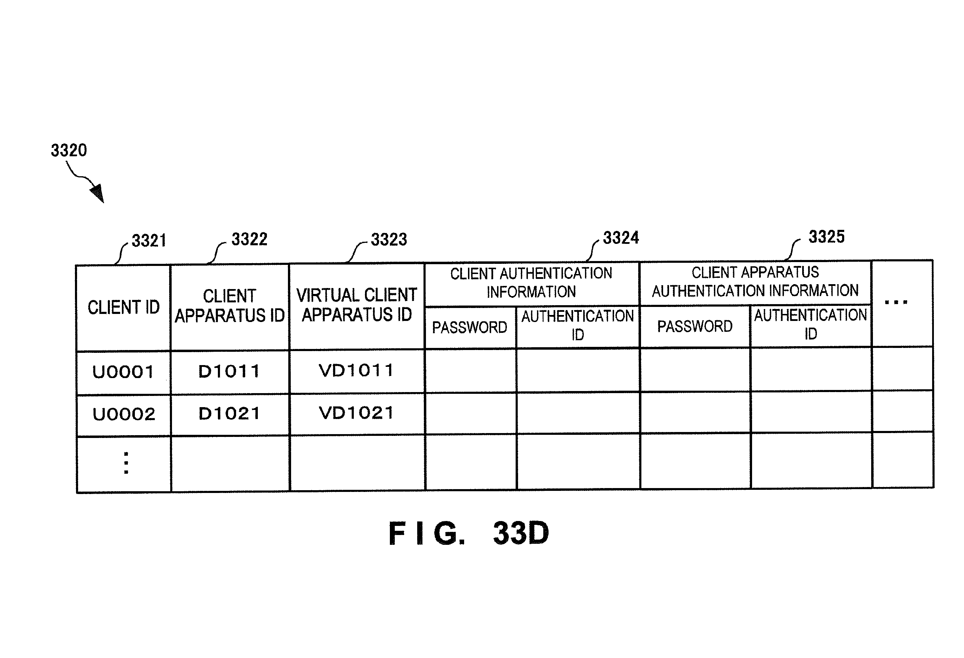

Fig. 33D is a view showing the arrangement of a virtual client apparatus table 3320 according to this embodiment. The virtual client apparatus table 3320 associates a client and a client apparatus that has requested processing with a virtual client apparatus generated in the cloud server 3320. The virtual client apparatus table 3320 also stores the authentication information of the client and the client apparatus to act for the client and the client apparatus that has requested processing.

The virtual client apparatus table 3320 stores a virtual client apparatus ID 3323, client authentication information 3324, client apparatus authentication information 3325 in association with a client ID 3321 and a client apparatus ID 3322.

### [Eighth Embodiment]

An information processing system according to the eighth embodiment of the present invention will be described next. The information processing system according to this embodiment is different from the second to seventh embodiments in that a client apparatus acquires a processing result via a cloud server. The rest of the components and operations is the same as in one of the first to sixth embodiments. Hence, the same reference numerals as in the embodiment denote the same components and operations, and a detailed description thereof will be omitted.

According to this embodiment, the cloud server manages processing result providing processing to the client, thereby maintaining confidentiality against information leakage or the like.

### «Operation Procedure of Information Processing System»

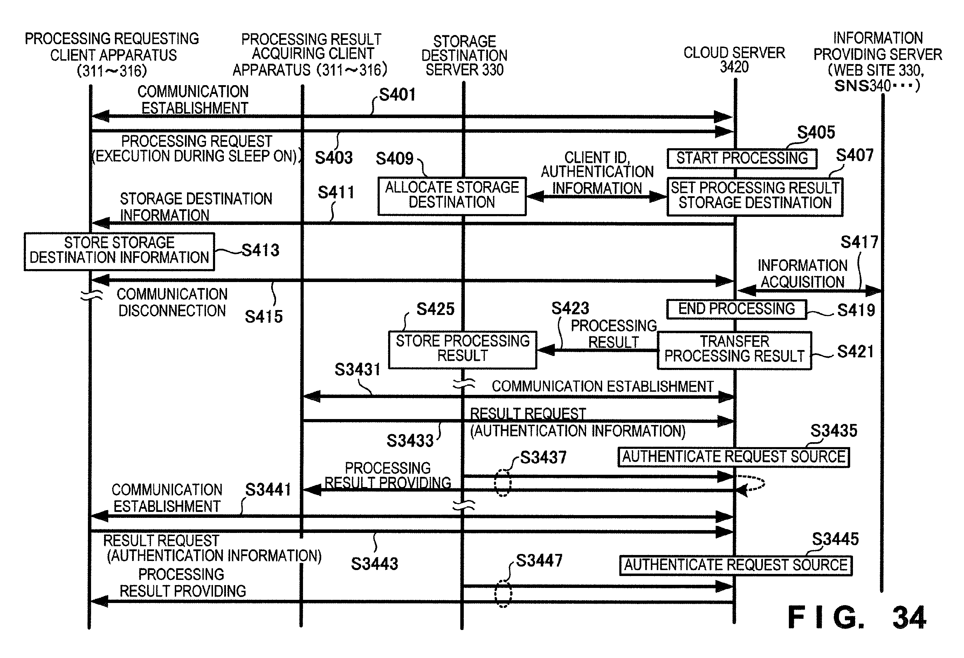

Fig. 34 is a sequence chart showing the operation procedure of the information processing system according to this embodiment. Note that steps S401 to S423 of Fig. 34 are the same as in Fig. 4 of the second embodiment, and a description thereof will be omitted.

In step S3431, communication between a cloud server 3420 and client apparatuses 311 to 316 that are different from the client apparatus that has requested and acquire the processing result is established. In this example, the access is done based on a URL. In step S3433, the client apparatuses 311 to 316 that acquire the processing result transmit a processing result acquisition request to the cloud server 3420 together with the client ID and authentication information. In step S3435, the cloud server 3420 authenticates the processing result request source. If authentication is impossible, the processing stops. If the client apparatus is authenticated, in step S3437, the cloud server 3420 acquires the processing result from a storage destination server 330 and provides it to the client apparatuses 311 to 316. Note that the processes of steps S3431 to S3437 can be performed as a series of processes based on simple instructions by the client. For example, the processes are preferably performed only by clicking the icon of a person, as shown in Fig. 2.

In step S3441, communication between the cloud server 3420 and the client apparatuses 311 to 316 that have requested is established. In this example, the access is done based on a URL. In step S3443, the client apparatuses 311 to 316 that have requested transmit a processing result acquisition request to the cloud server 3420 together with the client ID and authentication information. In step S3445, the cloud server 3420 authenticates the processing result request source. If authentication is impossible, the processing stops. If the client apparatus is authenticated, in step S3447, the cloud server 3420 acquires the processing result from the storage destination server 330 and provides it to the client apparatuses 311 to 316 that have requested. Note that the processes of steps S3441 to S3447 are also preferably performed only by clicking the icon of a person, as shown in Fig. 2.

### [Ninth Embodiment]

An information processing system according to the ninth embodiment of the present invention will be described next. The information processing system according to this embodiment is different from the second to eighth embodiments in that a cloud server includes a processing result DB. The rest of the components and operations is the same as in one of the first to sixth embodiments. Hence, the same reference numerals as in the embodiment denote the same components and operations, and a detailed description thereof will be omitted.

According to this embodiment, the cloud server directly manages the processing result, thereby maintaining confidentiality against information leakage or the like.

### «Arrangement of Information Processing System»

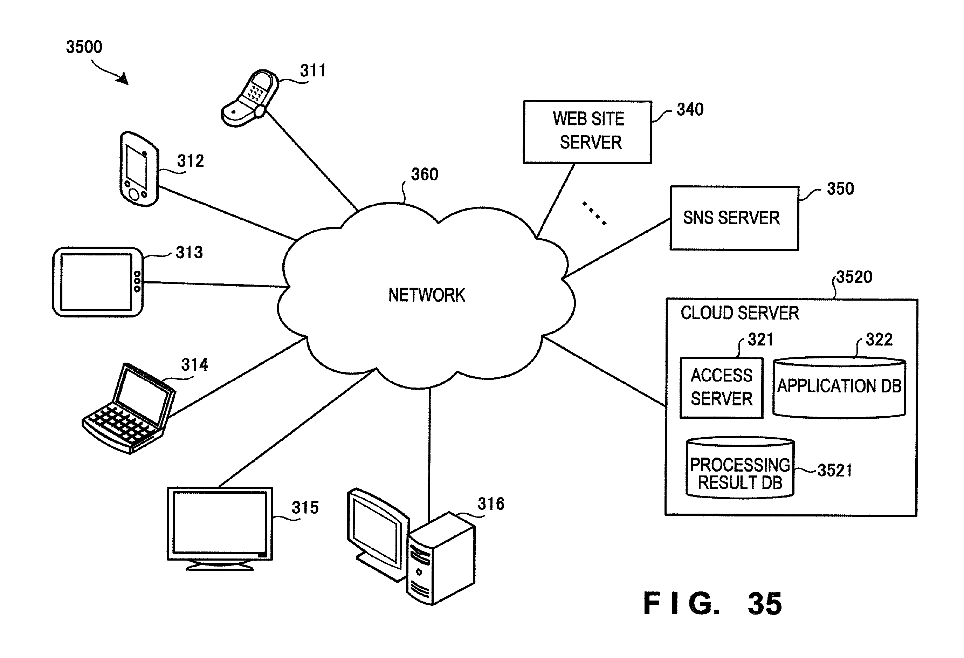

Fig. 35 is a block diagram showing the arrangement of an information processing system 3500 according to this embodiment. Note that the same reference numerals as in Fig. 3 of the second embodiment denote the same constituent elements in Fig. 35, and a description thereof will be omitted.

A cloud server 3520 includes an access server 321 that collects information from a web side server 340, an SNS server 350, or the like, and an application DB 322 that stores applications to be executed in correspondence with an information processing request from client apparatuses 311 to 316. The cloud server 3520 also includes a processing result DB 3521 that stores a processing result that the cloud server 3520 has obtained by performing information processing even during communication disconnection to the client apparatuses 311 to 316, and is accessible by each URL. If the client can be authenticated in response to access from the client apparatuses 311 to 316, the processing result in the processing result DB 3521 is provided to the client apparatuses 311 to 316.

### [Other Embodiments]

In the above-described embodiments, the storage destination at which the result of requested information processing is stored is the storage destination server different from the cloud server. However, the storage destination server may be allocated in the cloud server. This arrangement is decided in consideration of the processing load, communication load, processing speed, and the like.

In the embodiments, the client apparatus that has requested information processing is notified of access information. However, the present invention is not limited to this. For example, when requesting information processing from a PC, a communication terminal may be notified of access information. When requesting information processing from a communication terminal, another communication terminal or PC may be notified of access information. Alternatively, not the same client but another designated client terminal may be notified of access information.

The information processing procedure corresponding to the client or customer need not always be owned by only the client who has created it, and may be made open to other clients under predetermined conditions. In this case as well, access to the result of information processing is preferably permitted for only authenticated clients.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention is applicable to a system including a plurality of devices or a single apparatus. The present invention is also applicable even when a control program for implementing the functions of the embodiments is supplied to the system or apparatus directly or from a remote site. Hence, the present invention also incorporates the control program installed in a computer to implement the functions of the present invention on the computer, a medium storing the control program, and a WWW (World Wide Web) server that causes a user to download the control program.

This application claims the benefit of Japanese Patent Application No. 2012-068506 filed on March 24, 2012, which is hereby incorporated by reference herein in its entirety.

## Claims

1. An information processing system including a first information processing apparatus and a second information processing apparatus which are connected to each other for communication, comprising:
a requester arranged in said first information processing apparatus that sends a request of executing information processing to said second information processing apparatus;
an access information notifier that generates access information used to access a processing result storage in which said second information processing apparatus stores a result of the information processing in accordance with the request of the information processing from said first information processing apparatus, and notifies the access information from said second information processing apparatus to said first information processing apparatus;
a processing controller that continues executing the information processing during communication disconnection between said first information processing apparatus and said second information processing apparatus, and stores result of the information processing into said processing result storage to be accessed based on the access information; and
a processing result provider that provides the result of the information processing stored in said processing result storage to said first information processing apparatus in response to an access based on the access information from said first information processing apparatus.

2. The information processing system according to claim 1, wherein said second information processing apparatus comprises a virtual client apparatus generator that generates a virtual first information processing apparatus corresponding to said first information processing apparatus, and
said processing controller executes the information processing using said virtual first information processing apparatus during the communication disconnection.

3. The information processing system according to claim 1 or 2, wherein said processing result provider provides the result of the information processing stored in said processing result storage to a third information processing apparatus different from said first information processing apparatus in response to an access based on the access information from said third information processing apparatus.

4. The information processing system according to any one of claims 1 to 3, wherein said processing result storage is accessible without intervention of said second information processing apparatus, and
said processing result provider provides the result of the information processing stored in said processing result storage to said first information processing apparatus without intervention of said second information processing apparatus in response to an access based on the access information without intervention of said second information processing apparatus.

5. The information processing system according to any one of claims 1 to 4, wherein the information processing system comprises a thin client-server system, and
said first information processing apparatus comprises a thin client apparatus, and said second information processing apparatus comprises a server.

6. The information processing system according to any one of claims 1 to 5, wherein the information processing includes at least one of search processing of information and editing processing of found information.

7. The information processing system according to any one of claims 1 to 6, wherein said processing controller includes a database configured to hold an execution procedure of a plurality of applications and
the information processing is implemented by combining execution of the plurality of applications.

8. The information processing system according to claim 7, further comprising a client identifier that identifies a client who sent the request of the information processing by said first information processing apparatus,
wherein said processing controller executes the information processing in accordance with the execution procedure of the plurality of applications corresponding to the identified client.

9. The information processing system according to claim 7 or 8, further comprising a customer identifier that identifies a customer to whom the client presents the result of the information processing requested by said first information processing apparatus,
wherein said processing controller executes the information processing in accordance with the execution procedure of the plurality of applications corresponding to the identified customer.

10. The information processing system according to any one of claims 7 to 9, wherein the execution procedure of the plurality of applications is generated from a history of screen manipulations corresponding to one of the client and the customer and processed by said processing controller.

11. The information processing system according to any one of claims 1 to 10, further comprising a time designator that receives a time at which the result of the information processing is necessary, together with the request of the information processing from said first information processing apparatus,
wherein said processing controller executes the information processing in consideration of the time at which the result of the information processing is necessary, and store the result of the information processing into said processing result storage.

12. The information processing system according to any one of claims 1 to 11, further comprising a time designator that receives a periodical date and time at which the result of the information processing is necessary, together with the request of the information processing from said first information processing apparatus,
wherein said processing controller periodically executes the information processing in consideration of the periodical date and time at which the result of the information processing is necessary, and periodically store the result of the information processing into said processing result storage.

13. The information processing system according to any one of claims 1 to 12, wherein said processing controller executes the information processing in consideration of one of a load and power consumption of said second information processing apparatus, and store the result of the information processing into said processing result storage.

14. The information processing system according to any one of claims 1 to 13, wherein said processing result provider comprises a providing controller that controls to, when said first information processing apparatus has no capability of processing the processing result stored in said processing result storage, cause said second information processing apparatus to process the processing result and directly exchange information with an input or output terminal connected to said first information processing apparatus.

15. A control method of an information processing system including a first information processing apparatus and a second information processing apparatus which are connected to each other for communication, the method comprising:
sending a request of executing information processing from the first information processing apparatus to the second information processing apparatus;
generating access information used to access a processing result storage in which the second information processing apparatus stores a result of the information processing in accordance with the request of the information processing from the first information processing apparatus, and notifying the access information from the second information processing apparatus to the first information processing apparatus;
continuing to execute the information processing by the second information processing apparatus during communication disconnection between the first information processing apparatus and the second information processing apparatus, and storing the result of the information processing into the processing result storage to be accessed based on the access information; and
providing the result of the information processing stored in the processing result storage to the first information processing apparatus in response to an access based on the access information from the first information processing apparatus.

16. An information processing apparatus that receives a request of information processing from another information processing apparatus, comprising:
a request acceptor that accepts the request of the information processing from an information processing apparatus of a request source;
an access information transmitter that generates access information used to access a processing result storage storing a result of the information processing in accordance with the request of the information processing from the information processing apparatus of the request source, and notifies the information processing apparatus of the request source of the access information;
a processing controller that continues executing the information processing during communication disconnection to the information processing apparatus of the request source, and stores the result of the information processing into said processing result storage to be accessed based on the access information; and
a processing result provider that provides the result of the information processing stored in said processing result storage to the information processing apparatus of the request source in response to an access based on the access information from the information processing apparatus of the request source.

17. The information processing apparatus according to claim 16, further comprising a generator that generates a virtual information processing apparatus corresponding to the information processing apparatus of the request source, and
said processing controller executes the information processing using the virtual information processing apparatus during the communication disconnection.

18. The information processing apparatus according to claim 16 or 17, wherein said processing result provider provides the result of the information processing stored in said processing result storage to other information processing apparatus different from the information processing apparatus of the request source in response to an access based on the access information from the other different information processing apparatus.

19. The information processing apparatus according to any one of claims 16 to 18, wherein the information processing includes at least one of search processing of information and editing processing of found information.

20. The information processing apparatus according to any one of claims 16 to 19, wherein said processing controller includes a database configured to hold an execution procedure of a plurality of applications and
the information processing is implemented by combining execution of the plurality of applications.

21. The information processing apparatus according to claim 20, further comprising a client identifier that identifies a client who sent a request of the information processing by the information processing apparatus of the request source,
wherein said processing controller executes the information processing in accordance with the execution procedure of the plurality of applications corresponding to the identified client.

22. The information processing apparatus according to claim 20 or 21, further comprising a customer identifier that identifies a customer to whom the client presents the result of the information processing requested by the information processing apparatus of the request source,
wherein said processing controller executes the information processing in accordance with the execution procedure of the plurality of applications corresponding to the identified customer.

23. The information processing apparatus according to any one of claims 20 to 22, wherein the execution procedure of the plurality of applications is generated from a history of screen manipulations corresponding to one of the client and the customer and processed by said processing controller.

24. The information processing apparatus according to any one of claims 16 to 23, further comprising a time designator that receives a time at which the result of the information processing is necessary, together with the request of the information processing from the information processing apparatus of the request source,
wherein said processing controller executes the information processing in consideration of the time at which the result of the information processing is necessary, and store the result of the information processing into said processing result storage.

25. The information processing apparatus according to any one of claims 16 to 24, further comprising a time designator that receives a periodical date and time at which the result of the information processing is necessary, together with the request of the information processing from the information processing apparatus of the request source,
wherein said processing controller periodically executes the information processing in consideration of the periodical date and time at which the result of the information processing is necessary, and periodically store the result of the information processing into said processing result storage.

26. The information processing apparatus according to any one of claims 16 to 25, wherein said processing controller executes the information processing in consideration of one of a load and power consumption of the information processing apparatus, and store the result of the information processing into said processing result storage.

27. The information processing apparatus according to any one of claims 16 to 26, wherein said processing result provider comprises a providing controller that controls to, when the information processing apparatus of the request source has no capability of processing the processing result stored in said processing result storage, cause the second information processing apparatus to process the processing result and directly exchange information with an input or output terminal connected to the information processing apparatus of the request source.

28. A control method of an information processing apparatus that receives a request of information processing from another information processing apparatus, the method comprising:
accepting the request of the information processing from an information processing apparatus of a request source;
generating access information used to access a processing result storage storing a result of the information processing in accordance with the request of the information processing from the information processing apparatus of the request source, and notifying the information processing apparatus of the request source of the access information;
continuing to execute the information processing during communication disconnection to the information processing apparatus of the request source, and storing the result of the information processing into the processing result storage to be accessed based on the access information; and
providing the result of the information processing stored in the processing result storage to the information processing apparatus of the request source in response to an access based on the access information from the information processing apparatus of the request source.

29. A control program of an information processing apparatus that receives a request of information processing from another information processing apparatus, which causes a computer to execute:
accepting the request of the information processing from an information processing apparatus of a request source;
generating access information used to access a processing result storage storing a result of the information processing in accordance with the request of the information processing from the information processing apparatus of the request source, and notifying the information processing apparatus of the request source of the access information;
continuing to execute the information processing during communication disconnection to the information processing apparatus of the request source, and storing the result of the information processing into the processing result storage to be accessed based on the access information; and
providing the result of the information processing stored in the processing result storage to the information processing apparatus of the request source in response to an access based on the access information from the information processing apparatus of the request source.

30. An information processing apparatus that sends a request of executing information processing to another information processing apparatus, comprising:
a request transmitter that transmits the request of the information processing to an information processing system of a request destination;
an access information receiver that receives, from the information processing apparatus of the request destination, access information used to access a processing result storage in which the information processing apparatus of the request destination stores a result of the information processing; and
a disconnector that disconnects communication with the information processing apparatus of the request destination before an end of the information processing in the information processing apparatus of the request destination.

31. The information processing apparatus according to claim 31, further comprising a processing result accessor that accesses the result of the information processing stored in said processing result storage based on the access information.

32. A control method of an information processing apparatus that sends a request of executing information processing to another information processing apparatus, the method comprising:
transmitting the request of the information processing to an information processing system of a request destination;
receiving, from the information processing apparatus of the request destination, access information used to access a processing result storage in which the information processing apparatus of the request destination stores a result of the information processing; and
disconnecting communication with the information processing apparatus of the request destination before an end of the information processing in the information processing apparatus of the request destination.

33. A control program of an information processing apparatus that sends a request of executing information processing to another information processing apparatus, which causes a computer to execute:
transmitting the request of the information processing to an information processing system of a request destination;
receiving, from the information processing apparatus of the request destination, access information used to access a processing result storage in which the information processing apparatus of the request destination stores a result of the information processing; and
disconnecting communication with the information processing apparatus of the request destination before an end of the information processing in the information processing apparatus of the request destination.
